(19) Europäisches Patentamt
European Patent Office
Office européen des brevets

(11) Veröffentlichungsnummer: **0 341 206**
**A1**

# (12) EUROPÄISCHE PATENTANMELDUNG

(21) Anmeldenummer: **89810314.8**

(22) Anmeldetag: **26.04.89**

(51) Int. Cl.[4]: **C 09 B 62/503**
C 09 B 67/22, D 06 P 1/384

(30) Priorität: **05.05.88 CH 1688/88**

(43) Veröffentlichungstag der Anmeldung:
**08.11.89 Patentblatt 89/45**

(84) Benannte Vertragsstaaten:
**BE CH DE ES FR GB IT LI**

(71) Anmelder: **CIBA-GEIGY AG**
**Klybeckstrasse 141**
**CH-4002 Basel (CH)**

(72) Erfinder: **Püntener, Alois, Dr.**
**Pulverweg 13**
**D-4310 Rheinfelden (CH)**

**Lehmann, Urs, Dr.**
**Palmenstrasse 17**
**D-4055 Basel (CH)**

**Scheibli, Peter, Dr.**
**Nussbaumweg 3**
**D-4103 Bottmingen (CH)**

**Koller, Josef**
**Römerstrasse 22**
**D-4153 Reinach (CH)**

Patentansprüche für folgenden Vertragsstaat: ES.

(54) **Faserreaktive Formazanfarbstoffe, Verfahren zu deren Herstellung und deren Verwendung.**

(57) Die faserreaktiven Formazanfarbstoffe der Formel

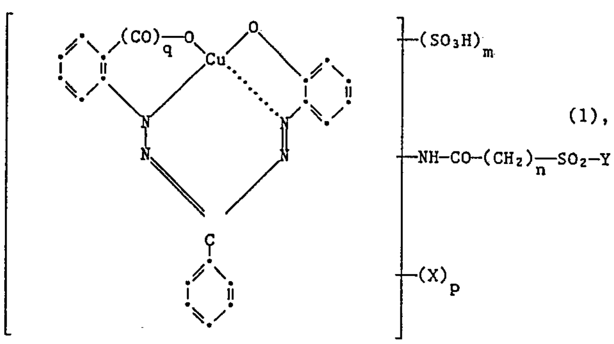

(1),

worin X $C_1$-$C_4$-Alkyl, $C_1$-$C_4$-Alkoxy, Halogen, Cyan oder Nitro ist, Y β-Halogenäthyl oder Vinyl, m die Zahl 1, 2 oder 3, n die Zahl 3 oder 4, p die Zahl 0, 1 oder 2 und q die Zahl 0 oder 1 bedeutet, ergeben auf stickstoffhaltigen oder hydroxylgruppenhaltigen Fasermaterialien Färbungen von guten Echtheiten.

EP 0 341 206 A1

**Beschreibung**

**Faserreaktive Formazanfarbstoffe, Verfahren zu deren Herstellung und deren Verwendung**

Die vorliegende Erfindung betrifft neue faserreaktive Formazanfarbstoffe, Verfahren zu deren Herstellung und die Verwendung dieser Farbstoffe zum Färben und Bedrucken von Fasermaterialien.

Gegenstand der vorliegenden Erfindung sind faserreaktive Formazanfarbstoffe der Formel

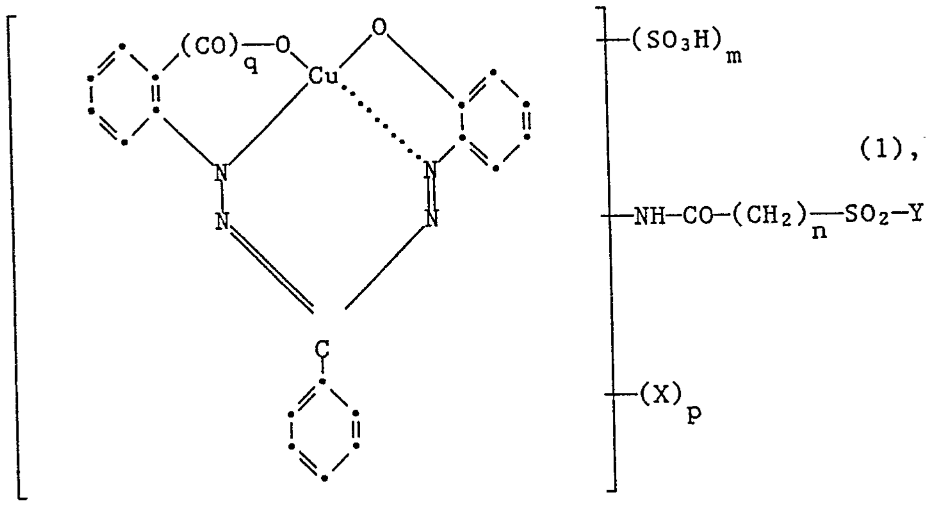

(1),

worin X $C_1$-$C_4$-Alkyl, $C_1$-$C_4$-Alkoxy, Halogen, Cyan oder Nitro ist, Y β-Halogenäthyl oder Vinyl, m die Zahl 1, 2 oder 3, n die Zahl 3 oder 4, p die Zahl 0, 1 oder 2 und q die Zahl 0 oder 1 bedeutet, sowie Mischungen dieser Farbstoffe.

Als Halogen kommt für X in Formel (1) z.B. Fluor, Brom oder vorzugsweise Chlor in Betracht.

Als β-Halogenäthyl kommt für Y in Formel (1) vorzugsweise ß-Bromäthyl oder insbesondere ß-Chloräthyl in Betracht. Bevorzugt sind Farbstoffe der Formel (1), worin q die Zahl 1 bedeutet.

Als $C_1$-$C_4$-Alkyl kommt für X in Formel (1) z.B. Methyl, Aethyl, Propyl, Isopropyl, Butyl, tert.-Butyl, sek.-Butyl und Isobutyl, insbesondere Methyl, in Betracht.

Als $C_1$-$C_4$-Alkoxy kommt für X in Formel (1) z.B. Methoxy, Aethoxy, Propoxy, Isopropoxy, Butoxy, sek.-Butoxy, tert.-Butoxy und Isobutoxy, insbesondere Methoxy oder Aethoxy, in Betracht.

Bevorzugt sind Farbstoffe der Formel (1), worin m die Zahl 2 bedeutet.

Ebenfalls bevorzugt sind Farbstoffe der Formel (1), worin X Chlor ist; insbesondere bevorzugt sind Farbstoffe der Formel (1), worin m die Zahl 2 und q die Zahl 1 bedeutet, und X Chlor ist.

Ferner sind Farbstoffe der Formel (1) bevorzugt, worin n die Zahl 3 bedeutet; insbesondere bevorzugt sind Farbstoffe der Formel (1), worin n die Zahl 3, m die Zahl 2, q die Zahl 1 und X Chlor ist.

Besonders bevorzugt sind die Farbstoffe der Formel

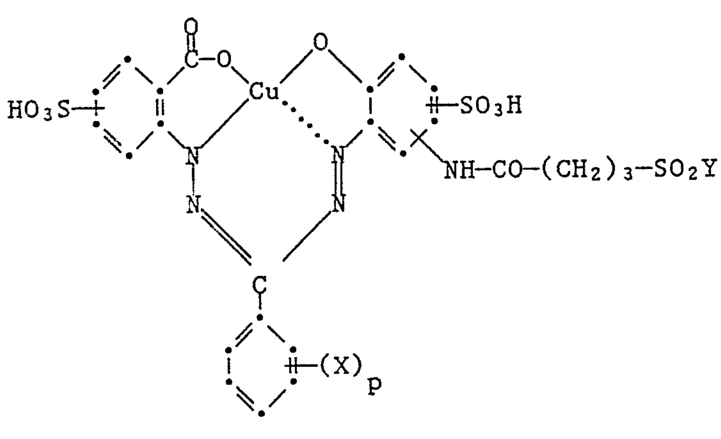

(2),

worin X Chlor ist und Y und p die unter Formel (1) angegebenen Bedeutungen haben.

Ebenfalls besonders bevorzugt sind die Farbstoffe der Formel

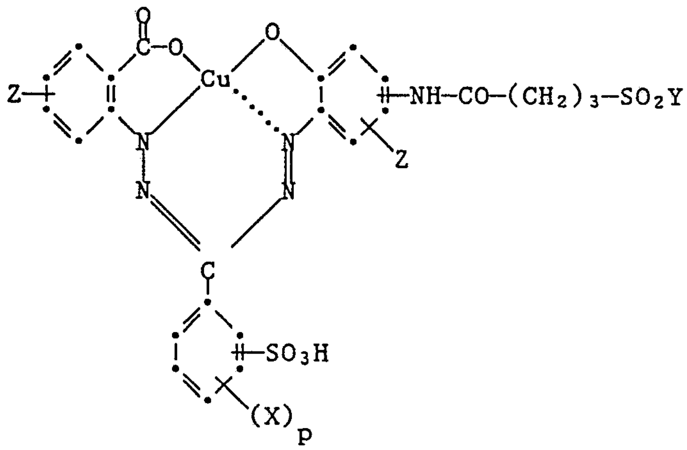

(3),

worin X Chlor ist und Y und p die unter Formel (1) angegebenen Bedeutungen haben, ein Z Wasserstoff und das andere Z Sulfo ist.

Ganz besonders bevorzugt sind die Farbstoffe der Formeln

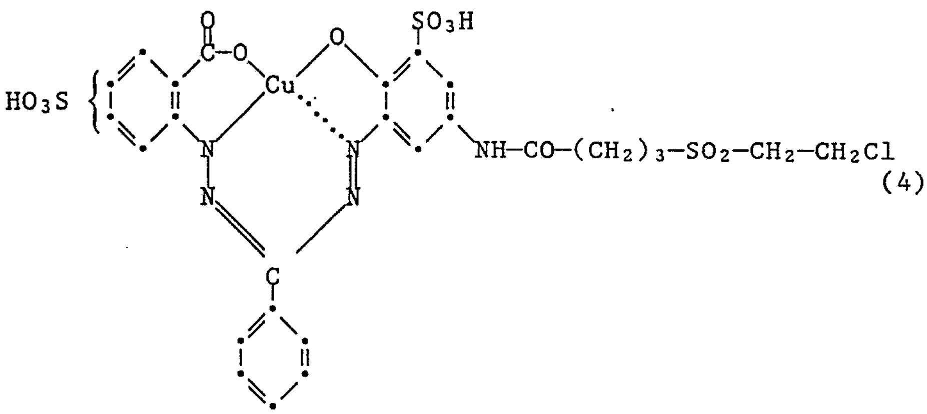

(4),

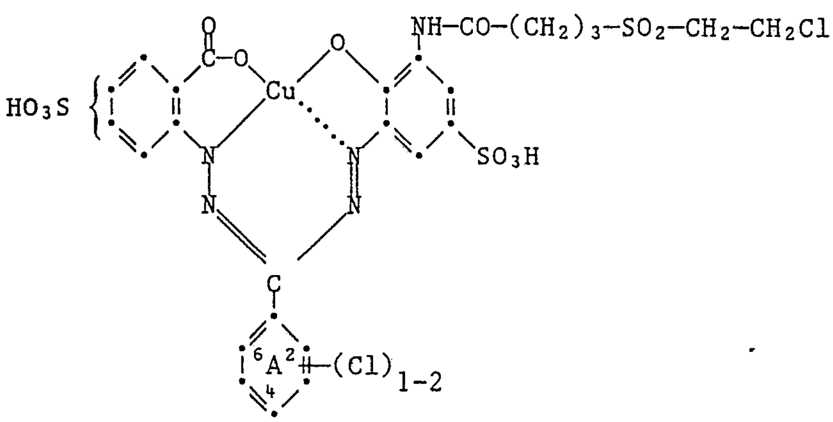

(5),

worin Chlor in 2-, 3- oder 4-Stellung an den Phenylring A gebunden ist, oder worin Chlor in 2- und 6-Stellung an den Phenylring A gebunden ist;

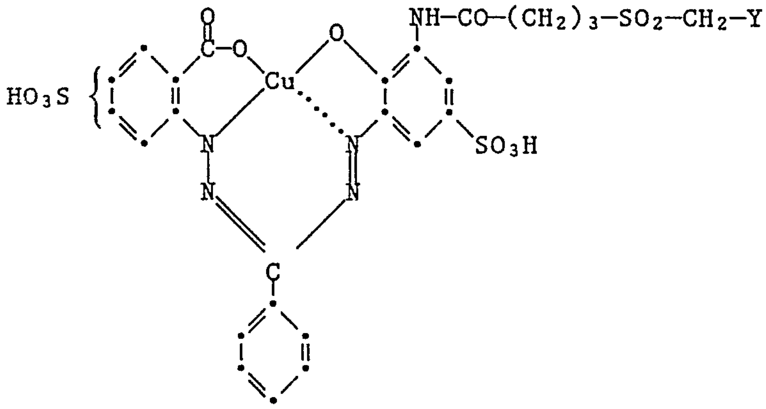

(6),

worin Y β-Chloräthyl oder Vinyl ist; und

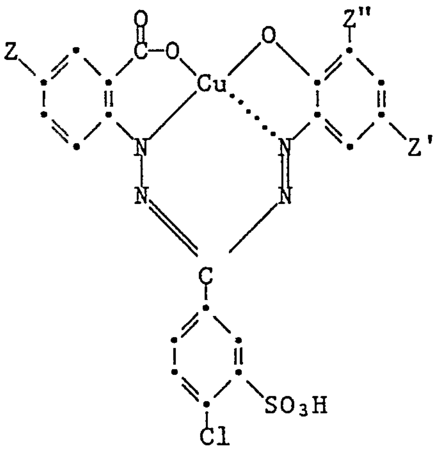

(7),

worin Z Wasserstoff, Z′ Sulfo und Z″ $-NH-CO-(CH_2)_3-SO_2-(CH_2)_2Cl$ ist, oder worin Z Sulfo, Z′ $-NH-CO-(CH_2)_3-SO_2-(CH_2)_2Cl$ und Z″ Wasserstoff ist.

Von den faserreaktiven Formazanfarbstoffen der Formeln (1), (2) und (5) ist der Farbstoff der Formel

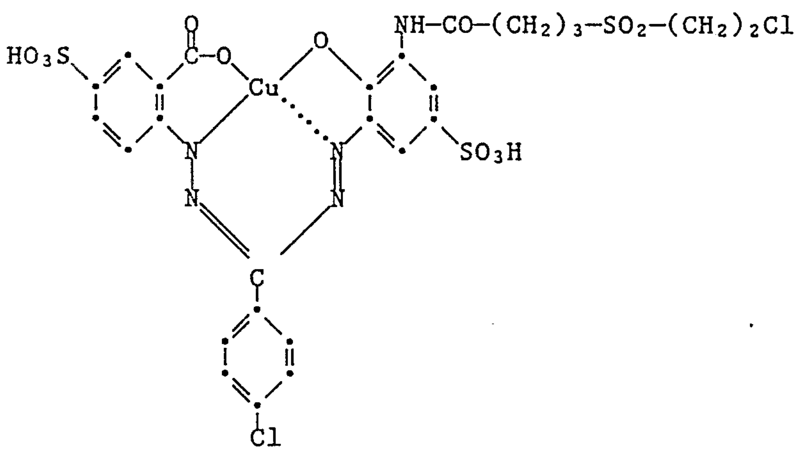

(8)

ganz besonders wichtig.

Gegenstand der Erfindung ist ferner ein Verfahren zur Herstellung der Farbstoffe der Formel (1), welches dadurch gekennzeichnet ist, dass man eine Verbindung der Formel

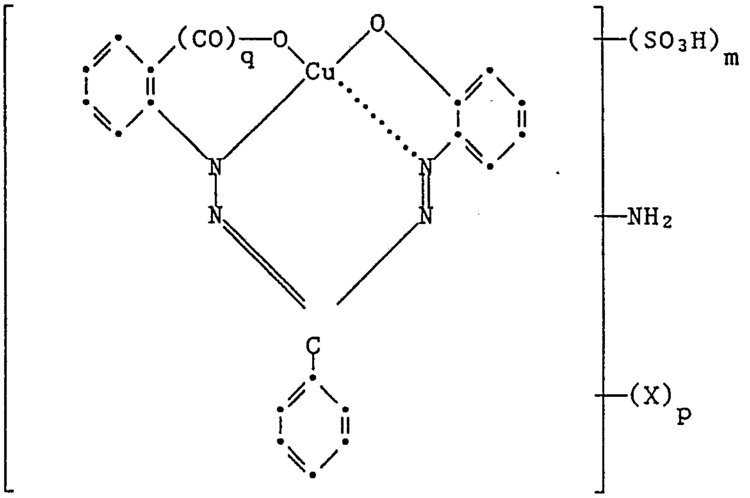

(9),

worin X, m, p und q die unter Formel (1) angegebenen Bedeutungen haben, mit einer den Rest der Formel $-CO-(CH_2)_n-SO_2-Y$ (10),
worin n und Y die unter Formel (1) angegebenen Bedeutungen haben, einführenden Verbindung umsetzt, und gegebenenfalls anschliessend den Rest $-SO_2-Y$ als β-Halogenäthylsulfonyl in Vinylsulfonyl umwandelt.

Als den Rest der Formel (10) einführende Verbindungen kommen vorzugsweise Säurehalogenide, insbesondere Säurechloride in Betracht. Als Beispiele seien genannt: $Cl-CO-(CH_2)_3-SO_2-(CH_2)_2Cl$, $Cl-CO-(CH_2)_4SO_2-(CH_2)_2Cl$, $Cl-CO-(CH_2)_3-SO_2-CH=CH_2$, $Cl-CO-(CH_2)_4-SO_2-CH=CH_2$.

Eine weitere Ausführungsform des erfindungsgemässen Verfahrens ist dadurch gekennzeichnet, dass man ein Amin der Formel (9) mit einer den Rest der Formel $-CO-(CH_2)_n-SO_2-(CH_2)_2-B$ einführenden Verbindung umsetzt, wobei n die unter Formel (1) angegebene Bedeutung hat und B ein unter alkalischen Bedingungen abspaltbarer anorganischer oder organischer Rest ist, wie z.B. $-OSO_3H$, $-SSO_3H$, $-OPO_3H_2$, $-S-CS-H(C_2H_5)_2$, $-N(CH_3)_2$, $-H(C_2H_5)_2$, $-OCOCH_3$.

An die Herstellung dieser den Rest B enthaltenden Farbstoffe wird dann eine Eliminierungsreaktion angeschlossen. Beispielsweise kann man den Farbstoff, welcher den Rest B enthält, unter alkalischen Bedingungen, wie z.B. Natriumhydroxid, behandeln, wobei unter Abspaltung des Restes HB der Rest der Formel $-CO-(CH_2)_n-SO_2-(CH_2)_2-B$ in den Rest $-CO-(CH_2)_n-SO_2-CH=CH_2$ übergeht.

Unter identischen alkalischen Bedingungen verläuft die oben angegebene Umwandlung des β-Chloräthylsulfonylrestes in die Vinylsulfonylgruppe.

Die Kondensation des Amins der Formel (9) mit der den Rest der Formel (10) einführenden Verbindung erfolgt vorzugsweise in wässriger Lösung, Emulsion oder Suspension, bei niederiger Temperatur, z.B. 0 bis 40°C, und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Eine bevorzugte Ausführungsform des erfindungsgemässen Verfahrens ist dadurch gekennzeichnet, dass man ein Amin der Formel (9) verwendet, worin m die Zahl 2 ist.

Eine ebenfalls bevorzugte Ausführungsform des erfindungsgemässen Verfahrens ist dadurch gekennzeichnet, dass man ein Amin der Formel (9) verwendet, worin X Chlor ist; insbesondere verwendet man ein Amin der Formel (9), worin X Chlor ist, m die Zahl 2 und q die Zahl 1 bedeutet zusammen mit einer den Rest der Formel (10) einführenden Verbindung.

Eine weitere bevorzugte Ausführungsform des erfindungsgemässen Verfahrens ist dadurch gekennzeichnet, dass man eine den Rest der Formel (10) einführende Verbindung verwendet, worin n die Zahl 3 ist; insbesondere verwendet man ein Amin der Formel (9), worin X Chlor ist, q die Zahl 1 und m die Zahl 2 bedeutet zusammen mit einer den Rest der Formel (10) einführenden Verbindung, worin n die Zahl 3 ist.

Eine besonders bevorzugte Ausführungsform des erfindungsgemässen Verfahrens zur Herstellung der Farbstoffe der Formel (2), ist dadurch gekennzeichnet, dass man ein Amin der Formel

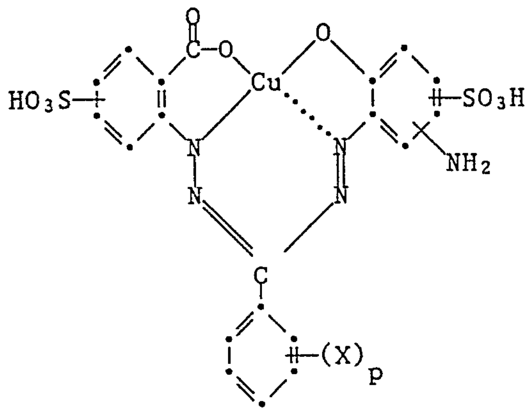

(11),

worin X und p die unter Formel (2) angegebenen Bedeutungen haben, mit einer den Rest der Formel
$-CO-(CH_2)_3-SO_2-Y$ (12),
worin Y die unter Formel (2) angegebene Bedeutung hat, einführenden Verbindung kondensiert.

Eine ebenfalls besonders bevorzugte Ausführungsform des erfindungsgemassen Verfahrens zur Herstellung der Farbstoffe der Formel (3), ist dadurch gekennzeichnet, dass man ein Amin der Formel

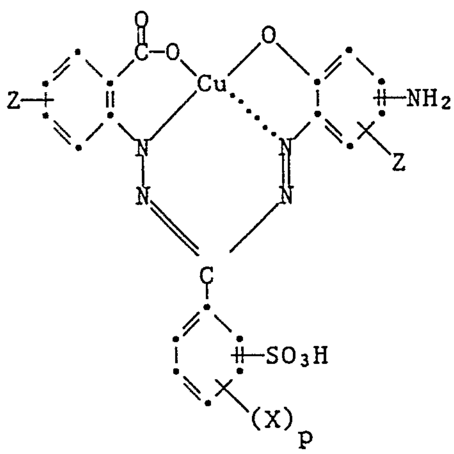

(13),

worin X, Z und p die unter Formel (3) angegebenen Bedeutungen haben, mit einer den Rest der Formel (12) einführenden Verbindung kondensiert.

Eine ganz besonders bevorzugte Ausführungsform des erfindungsgemässen Verfahrens zur Herstellung der Farbstoffe der Formel (4), ist dadurch gekennzeichnet, dass man ein Amin der Formel

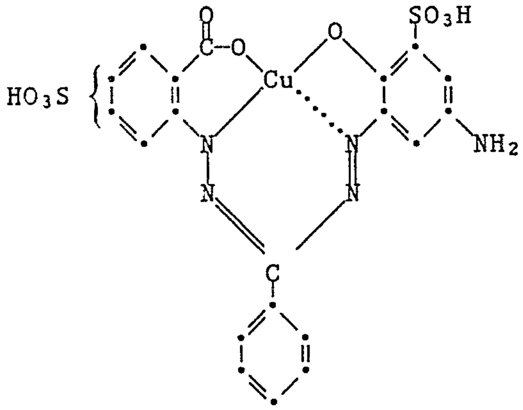

(14)

mit einer Verbindung der Formel $Cl-CO-(CH_2)_3-SO_2-(CH_2)_2Cl$ (15)
kondensiert.

Eine ebenfalls ganz besonders bevorzugte Ausführungsform des erfindungsgemässen Verfahrens zur Herstellung der Farbstoffe der Formel (5), ist dadurch gekennzeichnet, dass man ein Amin der Formel

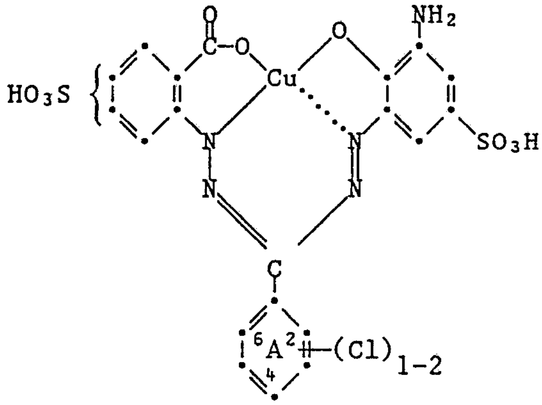

(16),

worin $(Cl)_{1-2}$ und A die unter Formel (5) angegebenen Bedeutungen haben zusammen mit einer Verbindung der Formel (15) kondensiert.

Eine weitere ganz besonder bevorzugte Ausführungsform des erfindungsgemässen Verfahrens zur Herstellung der Farbstoffe der Formel (6), ist dadurch gekennzeichnet, dass man ein Amin der Formel

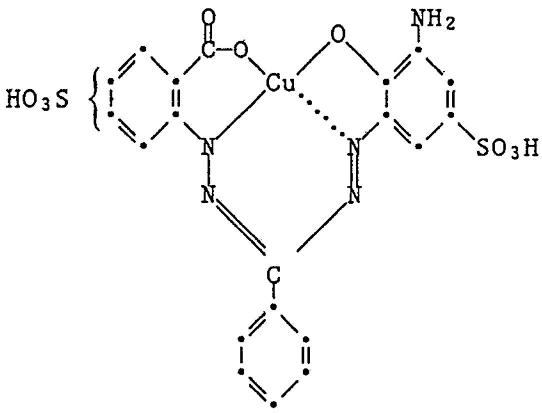

(17),

mit einer Verbindung der Formel (15) kondensiert und gegebenenfalls anschliessend die β-Chloräthylsulfonyl-Gruppe in die Vinylsulfonyl-Gruppe überführt.

Die ganz besonders bevorzugten Farbstoffe der Formel (7) werden hergestellt, indem man ein Amin der Formel

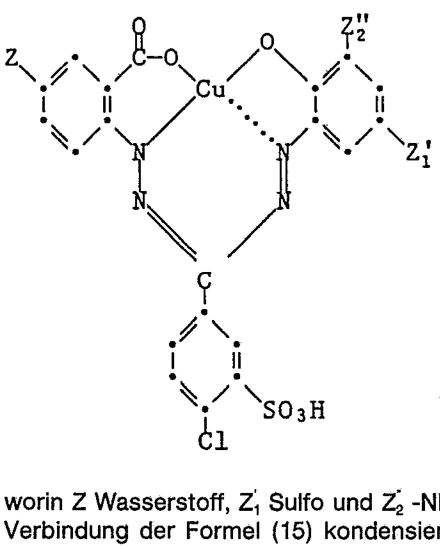

(18),

worin Z Wasserstoff, $Z_1'$ Sulfo und $Z_2''$ -$NH_2$ ist, oder worin Z Sulfo, $Z_1'$ -$NH_2$ und $Z_2''$ Wasserstoff ist, mit einer Verbindung der Formel (15) kondensiert.

Eine ganz besonders wichtige Ausführungsform des erfindungsgemässen Verfahrens zur Herstellung des Farbstoffes der Formel (8), ist dadurch gekennzeichnet, dass man ein Amin der Formel

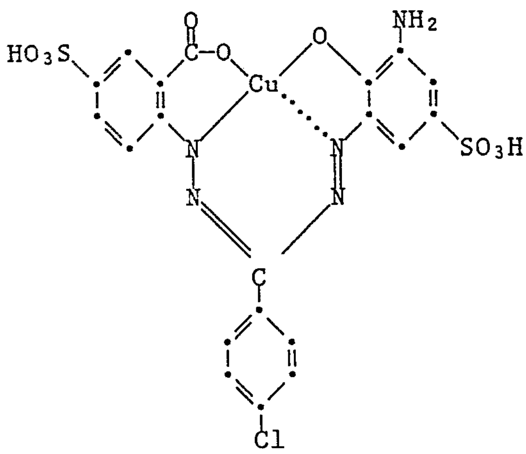

(19)

mit der Verbindung der Formel (15) kondensiert. Die Verbindungen der Formel (9) sind an sich bekannt oder können in Analogie zu bekannten Verbindungen hergestellt werden. Zur Herstellung der Kupferkomplexe der vierzähnigen Formazane sei auf K. Venkataraman, The Chemistry of Synthetic Dyes, Volume VI, Seiten 287 bis 297, Academic Press New York und London (1972) und Ullmanns Encyklopädie der technischen Chemie, Band 11, Seiten 714 bis 718, Verlag Chemie (1976) verwiesen.

Die den Rest der Formel (10) einführenden Verbindungen sind ebenfalls an sich bekannt oder können in Analogie zu bekannten Verbindungen herstellt werden, vgl. DE-B-1 644 087.

Die Farbstoffe der Formel (1) eignen sich zum Färben und Bedrucken der verschiedensten Fasermaterialien, insbesondere textiler Fasermaterialien, wie z.B. Seide, Fasermaterialien aus Cellulose und insbesondere Wolle, synthetische Polyamidfasermaterialien, wie z.B. Polyamid-6 und Polyamid-6,6 und Leder. Man erhält mit den Farbstoffen der Formel (1) egale Färbungen in blauen Tönen mit guten Allgemeinechtheiten, insbesondere guter Nassechtheit, wie z.B. Nassreibechtheit und guter Lichtechtheit. Ferner sind die Farbstoffe der Formel (1) sehr gut mit anderen Reaktivfarbstoffen kombinierbar. Das oben genannt Textilmaterial kann in den verschiedensten Verarbeitungsformen vorliegen, wie z.B. als Garn, Gewebe oder Gewirke.

Hervorzuheben ist, dass die erfindungsgemässen Farbstoffe der Formel (1) eine hohe Reduktionsstabilität besitzen, ein gutes Aufziehverhalten und gute Fixiergeschwindigkeit sowie eine hohe Faseregalität aufweisen und keinen Dichroismus zeigen.

Die erfindungsgemässen Farbstoffe der Formel (1), welche mindestens eine Sulfonsäuregruppe enthalten, liegen entweder in der Form ihrer freien Säure oder vorzugsweise als deren Salze vor. Als Salze kommen beispielsweise Alkali-, Erdalkali- oder Ammoniumsalze oder die Salze eines organischen Amins in Betracht. Als Beispiel seien die Natrium-, Lithium-, Kalium- oder Ammoniumsalze oder das Salz des Triäthanolamins genannt.

Hervorzuheben ist ferner für die erfindungsgemässen Farbstoffe der Formel (1) deren Eignung zum Trichromie-Färben und -Bedrucken von natürlichen oder synthetischen Polyamidfasermaterialien zusammen mit einem faserreaktiven gelb- oder orangefärbenden Farbstoff und einem faserreaktiven rotfärbenden Farbstoff.

Unter Trichromie ist die additive Farbmischung passend gewählter gelb-bzw. orange-, rot und blaufärbender Farbstoffe zu verstehen, mit denen jede gewünschte Nuance des sichtbaren Farbspektrums durch geeignete Wahl der Mengenverhältnisse eingestellt werden kann.

Die in dem Trichromie-Verfahren zu verwendenden Farbstoffe sollen einen gleichmässigen Farbaufbau bei gleichzeitiger Nuancenkonstanz in verschiedenen Konzentrationen und eine gute Kombinierbarkeit zeigen.

Gegenstand der Erfindung ist somit ein Verfahren zum Trichromie-Färben oder -Bedrucken von natürlichen und synthetischen Polyamidfasermaterialien mit Farbstoffmischungen faserreaktiver Farbstoffe, welches dadurch gekennzeichnet ist, dass man einen blaufärbenden Farbstoff der Formel (1) zusammen mit einem gelb- oder orangefärbenden sulfogruppenhaltigen Reaktivfarbstoff und einem rotfärbenden sulfogruppenhaltigen Reaktivfarbstoff verwendet.

Insbesondere werden faserreaktive, sulfogruppenhaltige gelb- oder orange-und rotfärbende Azofarbstoffe verwendet, die als faserreaktive Gruppe vorzugsweise eine Halogentriazin- der Halogenpyrimidingruppe oder eine Gruppe der aliphatischen Reihe enthalten.

Als Halogenpyrimidingruppe oder Gruppe der aliphatischen Reihe werden vorzugweise als faserreaktive Gruppe Difluorchlorpyrimidinyl, insbesondere 2,4-Difluor-5-chlorpyrimidinyl, oder α,β-Dihalogenpropionyl, insbesondere α,β-Dibrompropionyl, oder α-Halogenacryloyl, insbesondere α-Bromacryloyl, verwendet.

Als gelb- oder orangefärbende, sulfogruppenhaltige, faserreaktive Farbstoffe kommen z.B. die folgenden in Betracht:

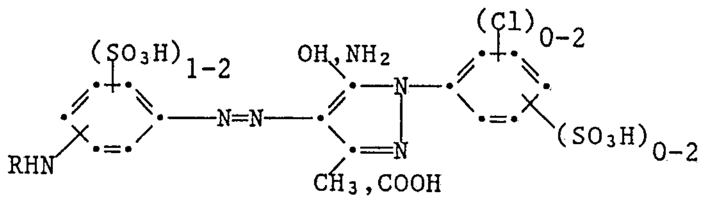

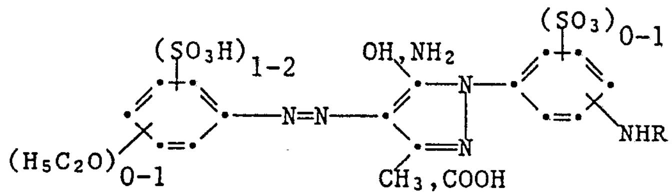

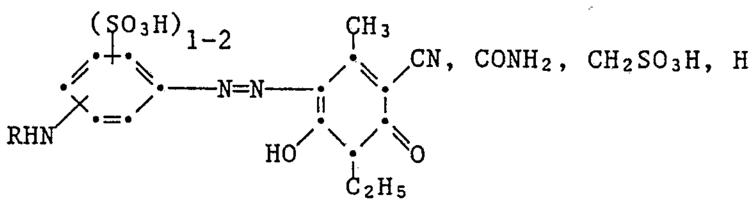

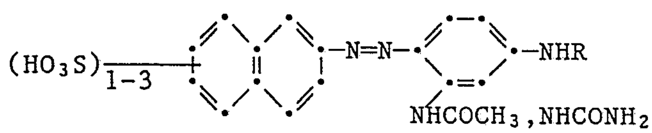

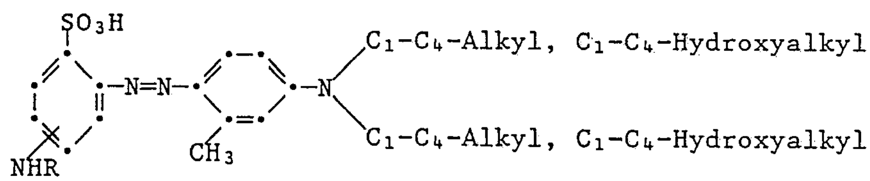

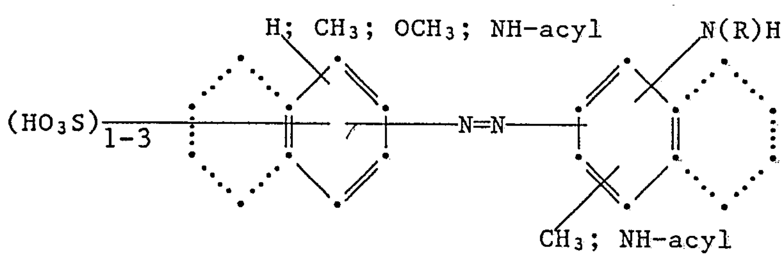

Als rotfärbende, sulfogruppenhaltige, faserreaktive Farbstoffe kommen z.B. die folgenden in Betracht:

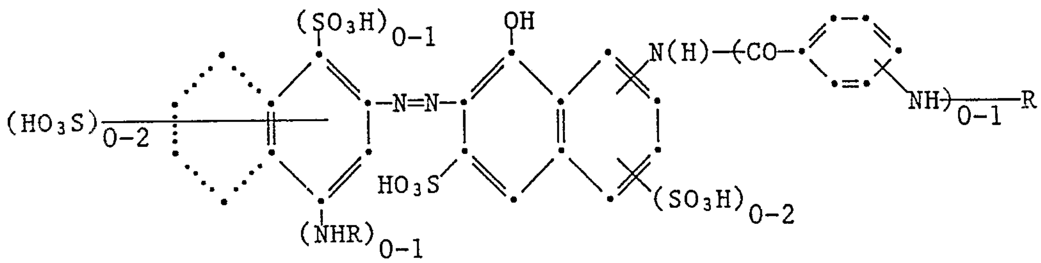

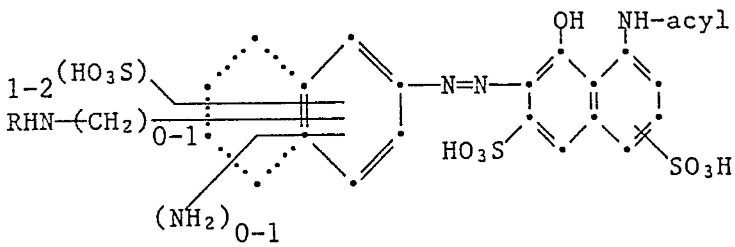

worin acyl z.B. Acetyl oder gegebenenfalls substituiertes Benzoyl ist.

Die durch Punkte angedeuteten kondensierten Ringe stehen für alternativ mögliche Naphthalinsysteme.

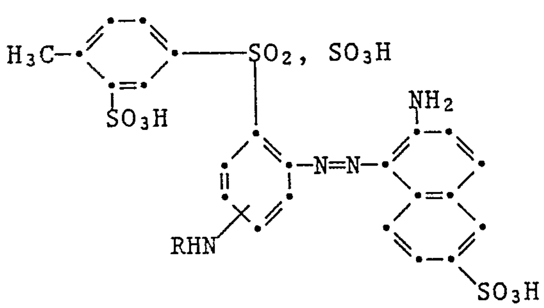

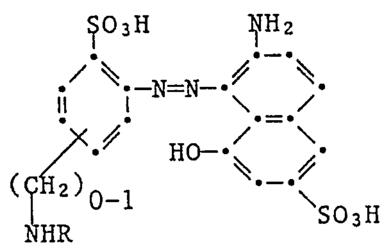

In den vorstehenden Formeln bedeutet R einen faserreaktiven Rest, insbesondere einen faserreaktiven Rest der Halogentriazin- oder der Halogen-Pyrimidinreihe oder der aliphatischen Reihe, vorzugsweise bedeutet R Difluorchlorpyrimidinyl oder α,β-Dihalogenpropionyl oder α-Bromacryloyl. Besonders bevorzugt ist R 2,4-Difluor-5-chlorpyrimidin-6-yl- oder α,β-Dibrompropionyl oder α-Bromacyloyl.

In dem erfindungsgemässen Verfahren zum Trichromie-Färben oder -Bedrucken von natürlichen und synthetischen Polyamidfasermaterialien werden als blaufärbende Farbstoffe die obengenannten, insbesondere diejenigen der Formeln (2) bis (7) und ganz besonders bevorzugt der Farbstoff der Formel (8) verwendet.

Als besonders bevorzugte gelb- oder orangefärbende Farbstoffe kommen in Betracht:

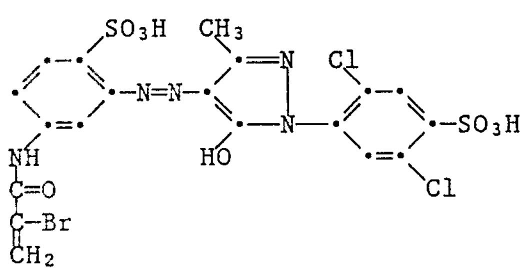

oder

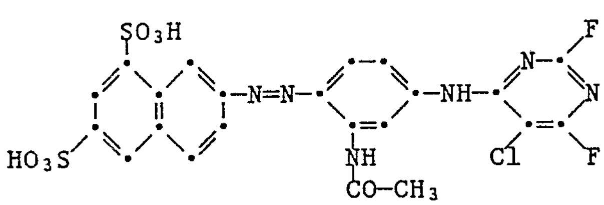

Als besonders bevorzugte rotfärbende Farbstoffe kommen in Betracht:

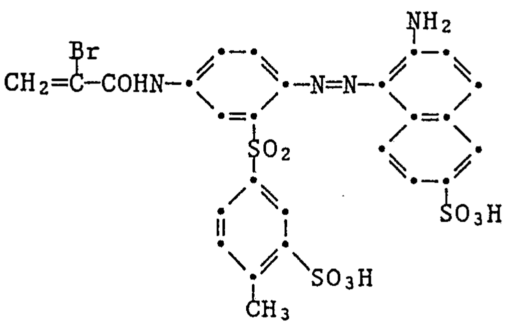

oder

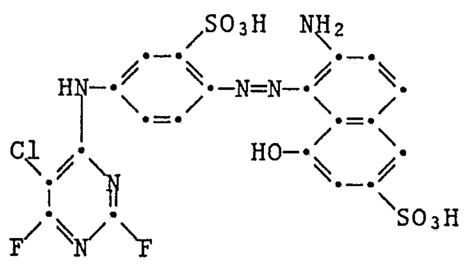

Die in dem erfindungsgemässen Verfahren zum Trichromie-Färben oder -Bedrucken verwendeten gelb- bzw. orange- und rotfärbenden Farbstoffe sind bekannt oder können in Analogie zu bekannten Farbstoffen hergestellt werden. Die Farbstoffe liegen entweder in der Form ihrer freien Sulfonsäure oder vorzugsweise als deren Salz vor, wobei die gleichen Salze wie für die Farbstoffe der Formel (1) angegeben verwendet werden können.

Die Mengen, in denen die Farbstoffe der Formel (1) und die gelb- bzw. orange- und rot-färbenden faserreaktiven Farbstoffe in den Färbebädern oder Druckpasten verwendet werden, können je nach der gewünschten Farbtiefe in weiten Grenzen schwanken, im allgemeinen haben sich Mengen von 0,01 bis 10 Gewichtsprozent, insbesondere 2 bis 10 Gewichtsprozent, bezogen auf das Färbegut, bzw. die Druckpaste, als vorteilhaft erwiesen.

Vorzugsweise wird in dem erfindungsgemässen Verfahren Fasermaterial aus natürlichen Polyamiden, insbesondere Wolle, verwendet.

Besondere Vorrichtungen sind beim erfindungsgemässen Verfahren nicht erforderlich. Es können die üblichen Färbe- und Druckapparate und -maschinen, beispielsweise für Flocke, Kammzug, Stranggarn, Wickelkörper, Stückware und Teppiche verwendet werden.

Die wässrigen Färbebäder können neben dem Reaktivfarbstoff noch Hilfsmittel, insbesondere Egalisierhilfsmittel, enthalten. Die Egalisierhilfsmittel werden in einer Menge von 0,3 bis 3 Gewichtsprozent, bezogen auf das Fasermaterial, verwendet.

Als weitere Hilfsmittel können die Färbebäder Mineralsäuren, wie Schwefelsäure, Sulfaminsäure oder Phosphorsäure, organische Säuren, zweckmässig niedere, aliphatische Carbonsäuren, wie Ameisensäure, Essigsäure oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 6 mit einer organischen Säure, insbesondere Ameisensäure oder Essigsäure.

Vorzugsweise färbt man bei einem pH-Wert von 4 bis 6, insbesondere 4,2 bis 5,5.

Ferner kann die Färbeflotte verschiedene Salze, insbesondere Ammoniumsalze oder Alkalisalze, wie z.B. Ammoniumsulfat oder Natriumsulfat als Hilfsmittel enthalten.

Das Flottenverhältnis kann innerhalb eines weiten Bereichs gewählt werden, von 1:6 bis 1:80, vorzugsweise 1:10 bis 1:50.

Das Färben erfolgt aus wässriger Flotte nach dem Ausziehverfahren z.B. bei einer Temperatur zwischen 80 und 105°C bzw. 110°C bei Verwendung eines Formaldehyd-abspaltenden Wollschutzmittels, vorzugsweise zwischen 98° und 103°C.

Die Färbedauer beträgt in der Regel 30 bis 90 Minuten.

Eine besonders bevorzugte Ausführungsform des erfindungsgemässen Verfahrens ist dadurch gekennzeichnet, dass man nach dem Färben bei vorzugsweise 98 bis 103°C die Färbeflotte abkühlen lässt auf ca. 75° bis 90°C und den pH-Wert auf 8 bis 9, vorzugsweise auf ca. 8,5, einstellt. Die Einstellung des pH-Wertes kann mit üblichen Mitteln erfolgen, z.B. Alkalihydroxidlösungen sowie insbesondere mit wässriger Ammoniaklösung üblicher Konzentration, z.B. 25 Gewichtsprozent Ammoniak enthaltend.

In den folgenden Beispielen stehen Teile für Gewichtsteile. Die Temperaturen sind Celsiusgrade. Die Beziehung zwischen Gewichtsteilen und Volumenteilen ist dieselbe wie zwischen diejenige zwischen Gramm und Kubikzentimeter.

Beispiel 1:

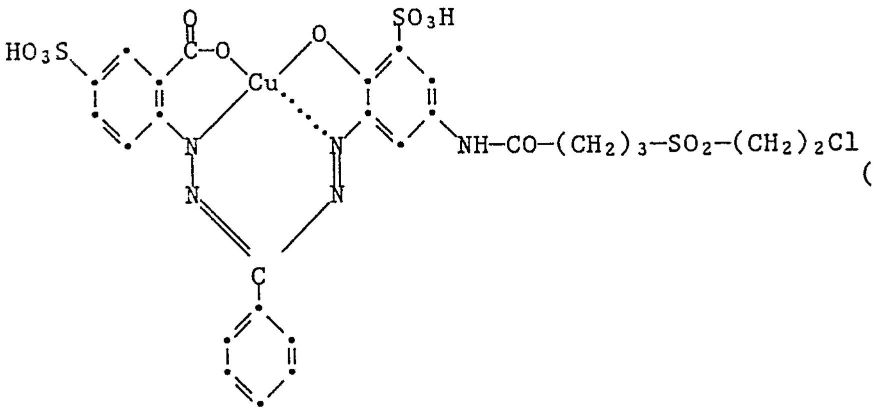

(101)

In 70 Teile Wasser werden 4,93 Teile des Amins der Formel

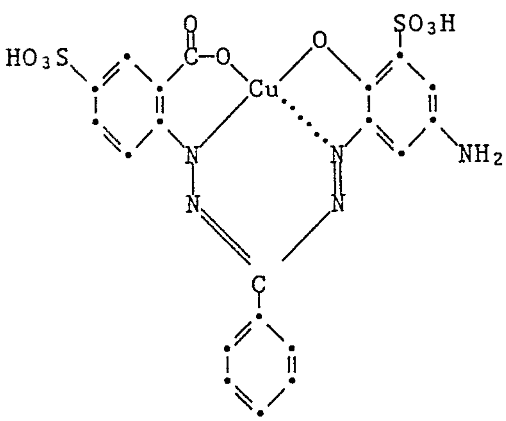

(102)

eingetragen und gut verrührt. Anschliessend wird die Lösung auf 10° abgekühlt und der pH-Wert von ca. 8,2 mit konzentrierter Salzsäure (32 %) auf 6,5 eingestellt. Innerhalb von 10 Minuten werden dann 1,4 Teile der Verbindung der Formel

$Cl-CO-(CH_2)_3-SO_2-(CH_2)_2Cl$ (103)

bei einer Temperatur von 10° und einem pH-Wert von 6,5 bis 7 zugetropft. Der pH-Wert wird durch Zugabe von wässriger Natriumhydroxid-Lösung (30 %) gehalten. Anschliessend lässt man 5 Stunden Hachrühren und setzt dann 10 Teile Natriumchlorid hinzu. Der vollständig ausgefallene Farbstoff wird abfiltriert und im Vakuum bei 50° getrocknet. Der gebildete Farbstoff, der in Form der freien Säure der Formel (101) entspricht, färbt Wolle in blauen Tönen mit guten Nassechtheiten und guter Lichtechtheit.

Beispiele 2-23:

Wenn man wie in Beispiel 1 angegeben verfährt, jedoch anstelle von 4,93 Teilen des Amins der Formel (102) eine äquimolare Menge der in der folgenden Tabelle in Spalte 2 angegebenen Amine verwendet, so erhält man die in Spalte 3 angegebenen Farbstoffe, die Wolle in dem in Spalte 4 angegebenen Farbton anfärben, wobei in den Beispielen 12 bis 23 die nicht fixierte Sulfogruppe in 3- oder in 4-Stellung steht.

| Bsp. | Amin | Farbstoff | Nuance auf Wolle |
|---|---|---|---|
| 2 | 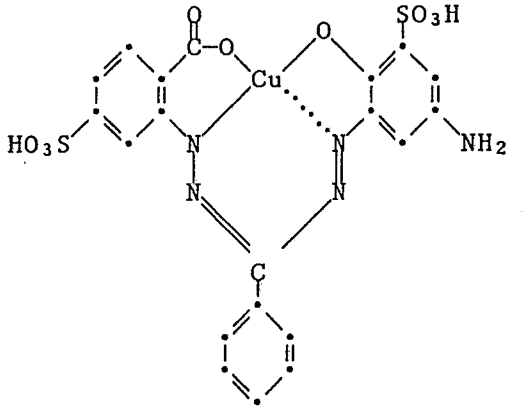 | 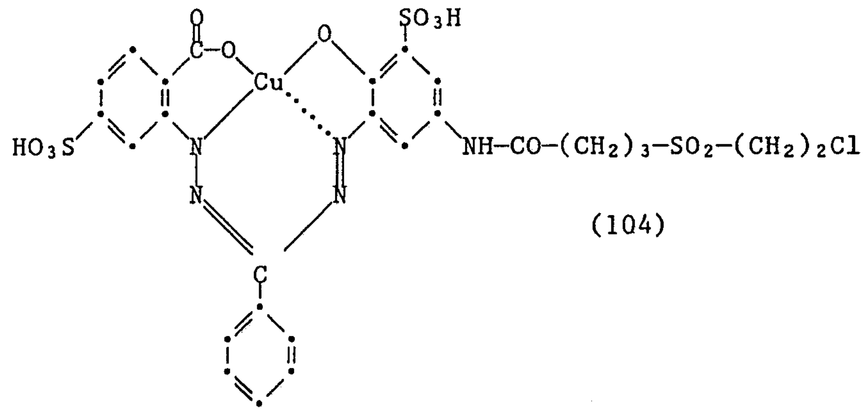 (104) | grünstichig blau |
| 3 | 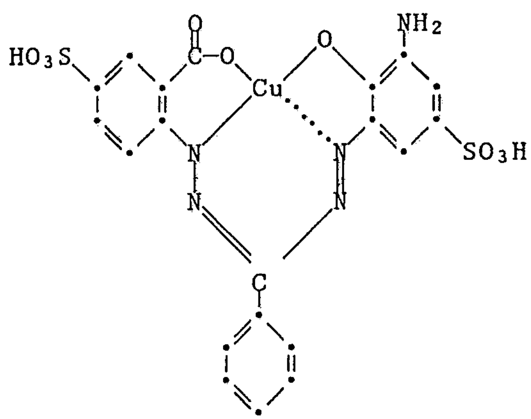 | 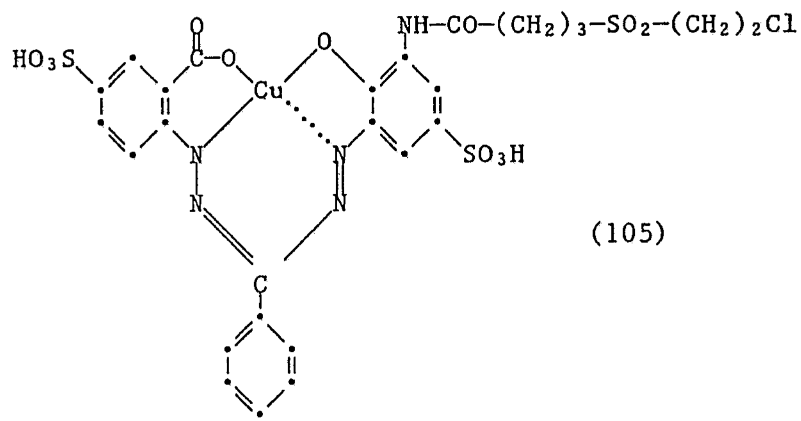 (105) | blau |

| Bsp. | Amin | Farbstoff | Nuance auf Wolle |
|---|---|---|---|
| 4 | 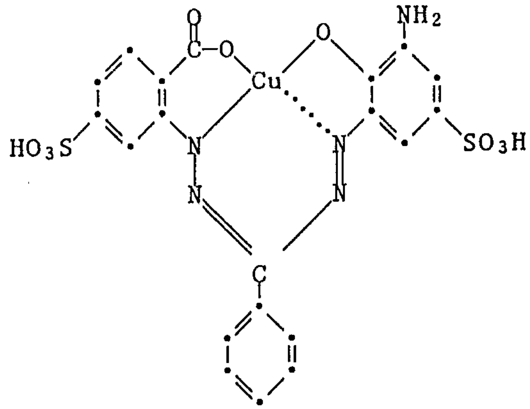 | 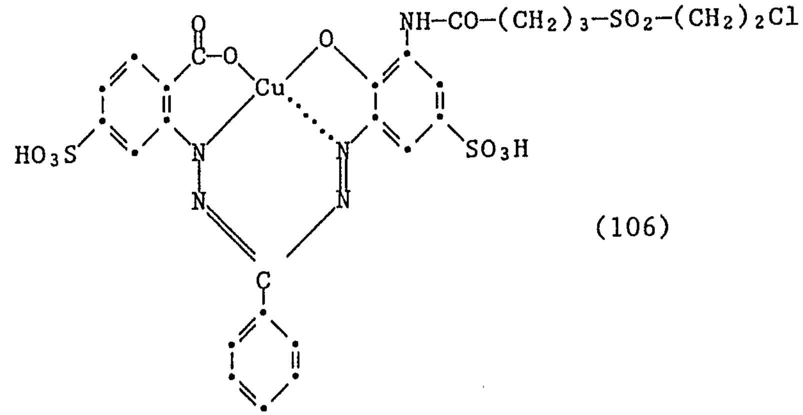 (106) | blau |
| 5 | 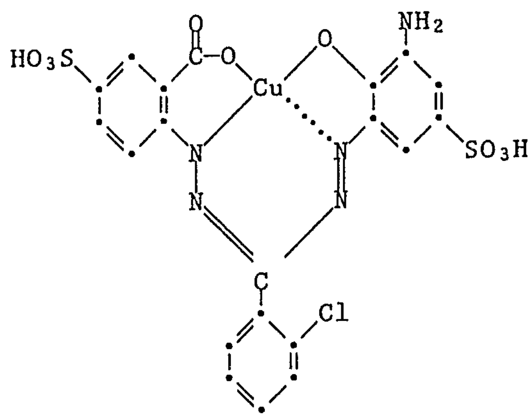 | 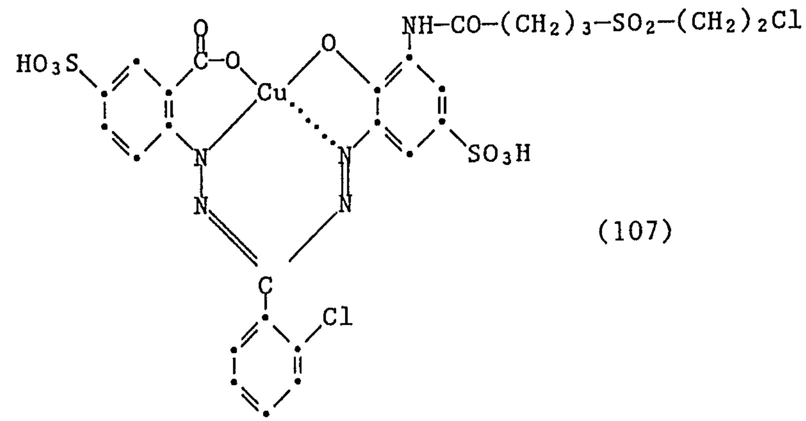 (107) | rotstichig blau |

| Bsp. | Amin | Farbstoff | Nuance auf Wolle |
|---|---|---|---|
| 6 | 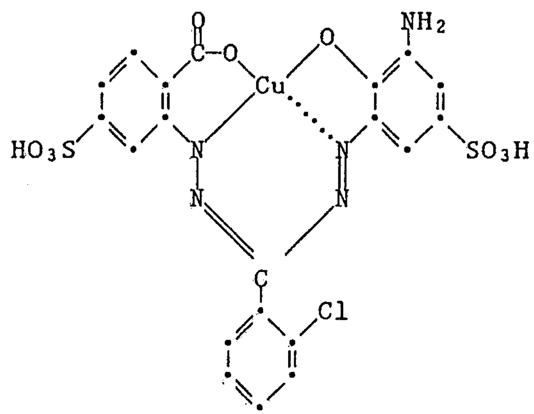 | 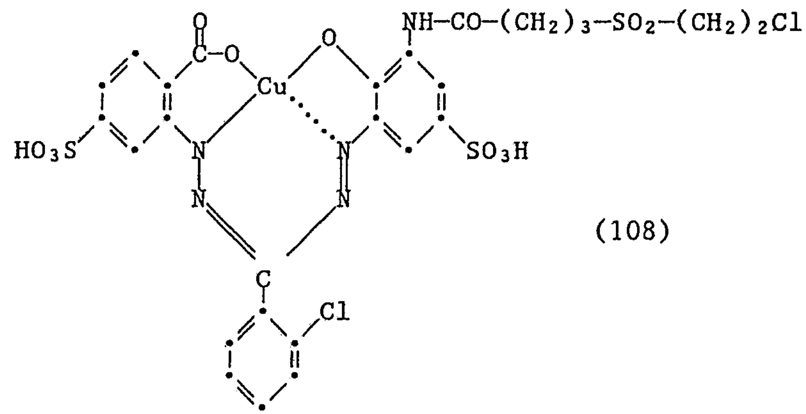 (108) | rotstichig blau |
| 7 | 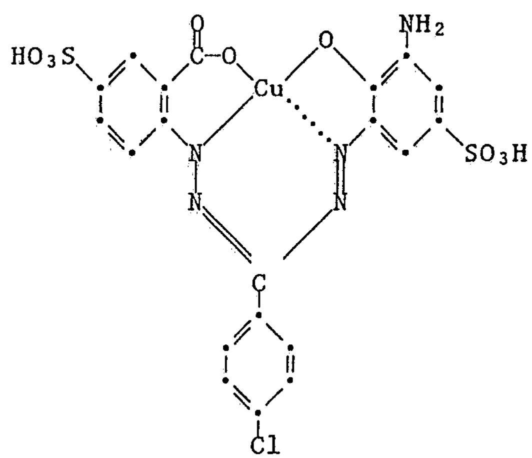 | 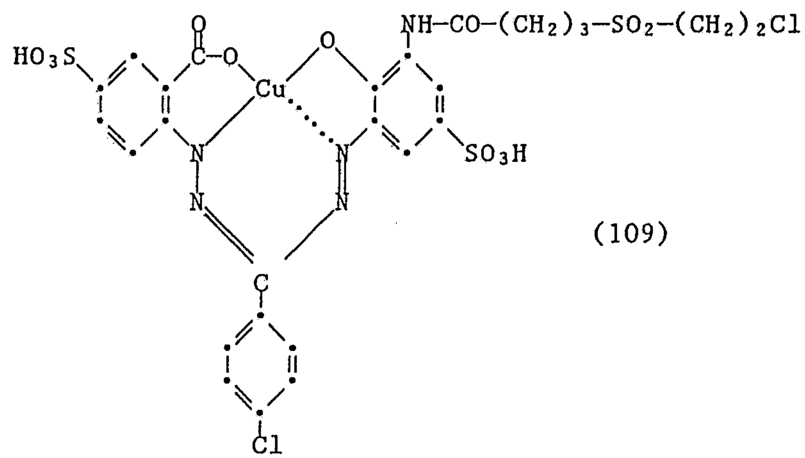 (109) | grünstichig blau |

| Bsp. | Amin | Farbstoff | Nuance auf Wolle |
|---|---|---|---|
| 8 | 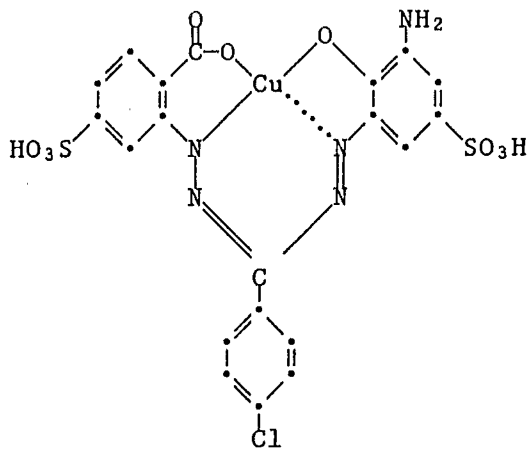 | 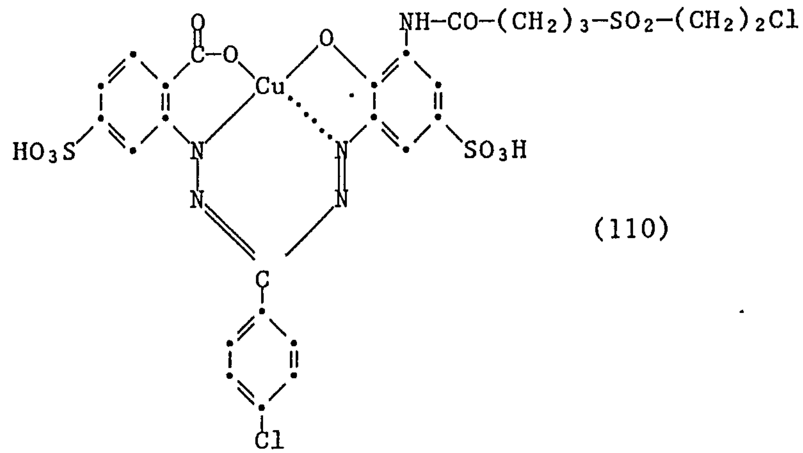 (110) | grünstichig blau |
| 9 | 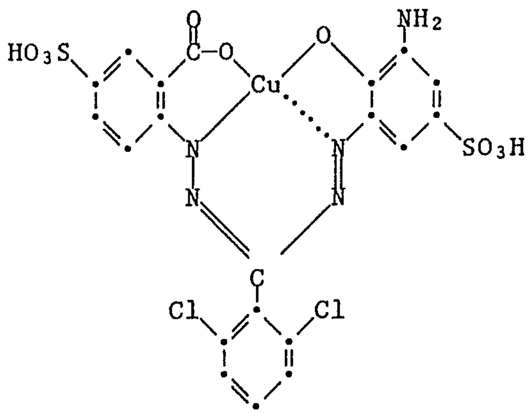 | 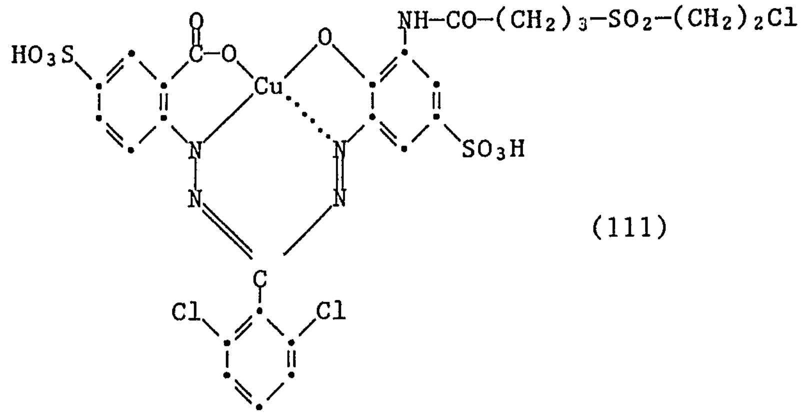 (111) | rotstichig blau |

| Bsp. | Amin | Farbstoff | Nuance auf Wolle |
|---|---|---|---|
| 10 | 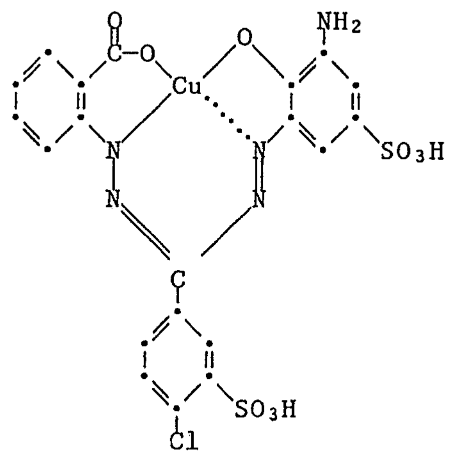 | 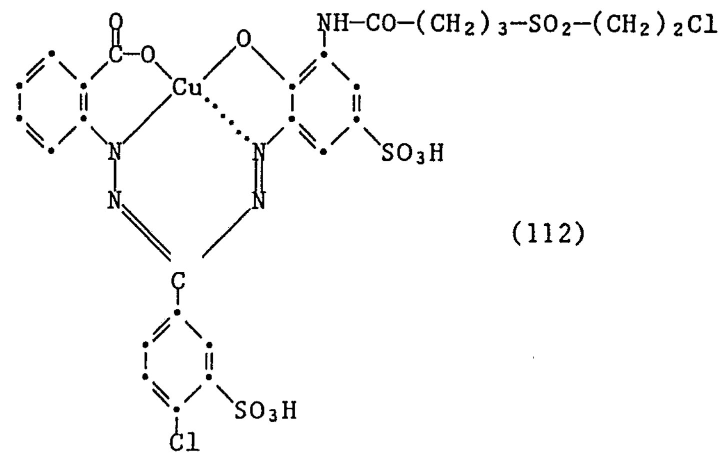 (112) | grünstichig blau |
| 11 | 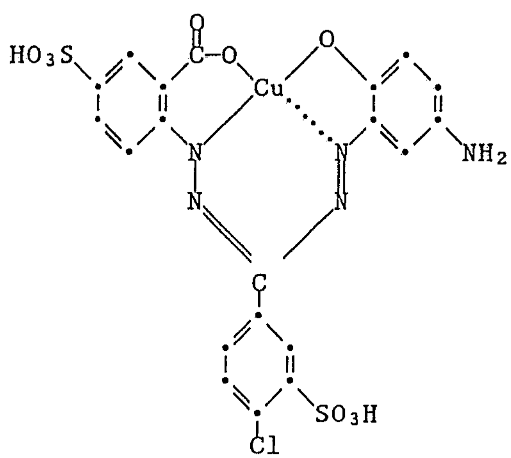 | 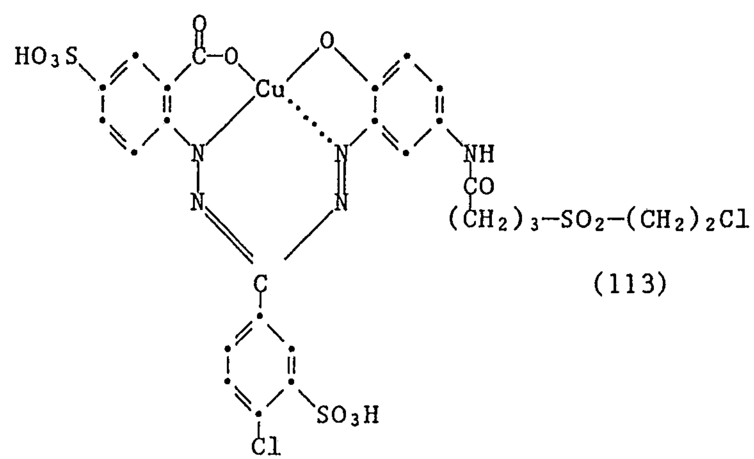 (113) | grünstichig blau |

| Bsp. | Amin | Farbstoff | Nuance auf Wolle |
|---|---|---|---|
| 12 | 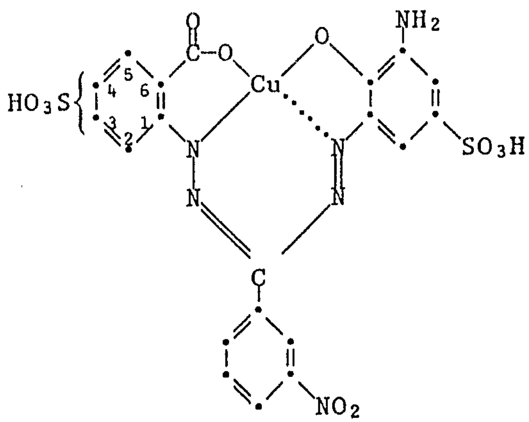 | 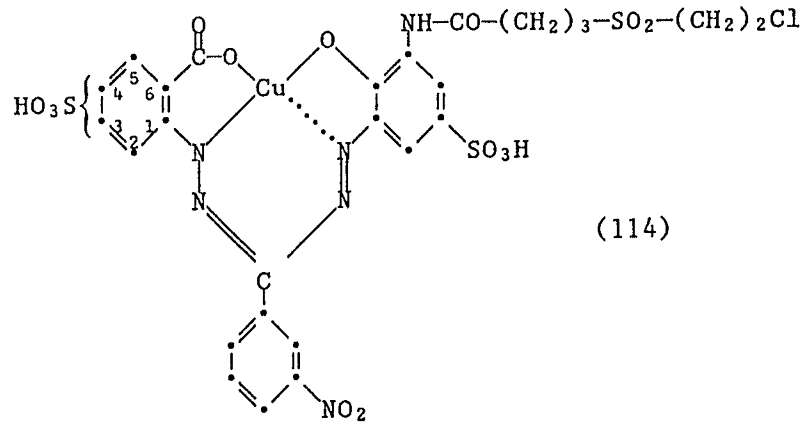 (114) | blau |
| 13 | 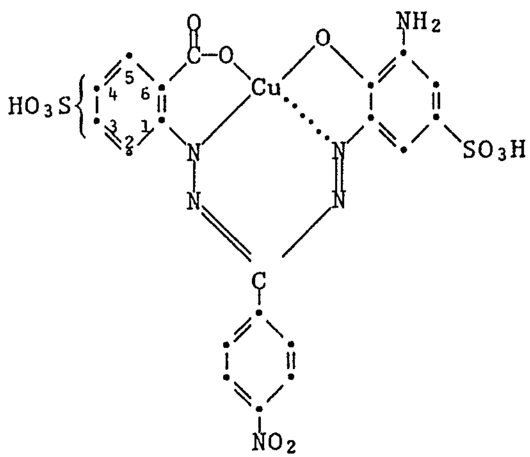 | 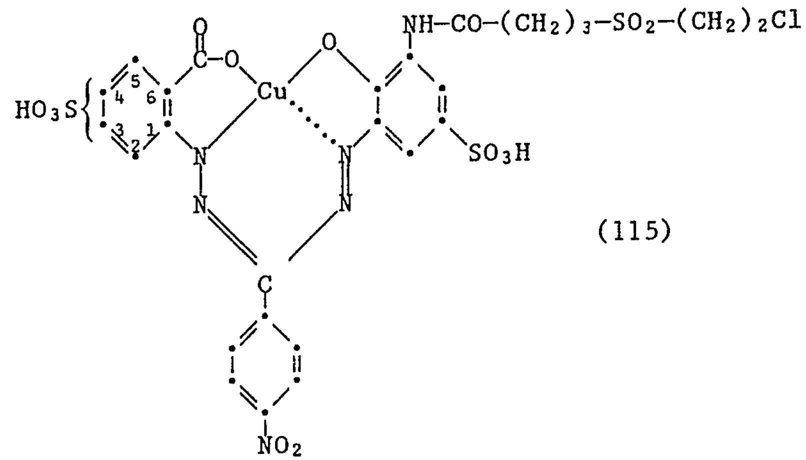 (115) | blau |

| Bsp. | Amin | Farbstoff | Nuance auf Wolle |
|---|---|---|---|
| 14 | 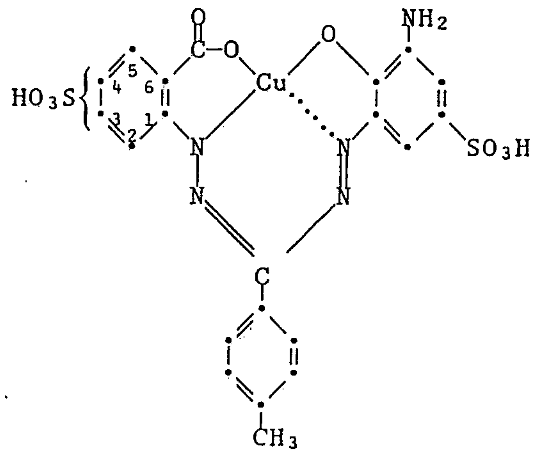 | 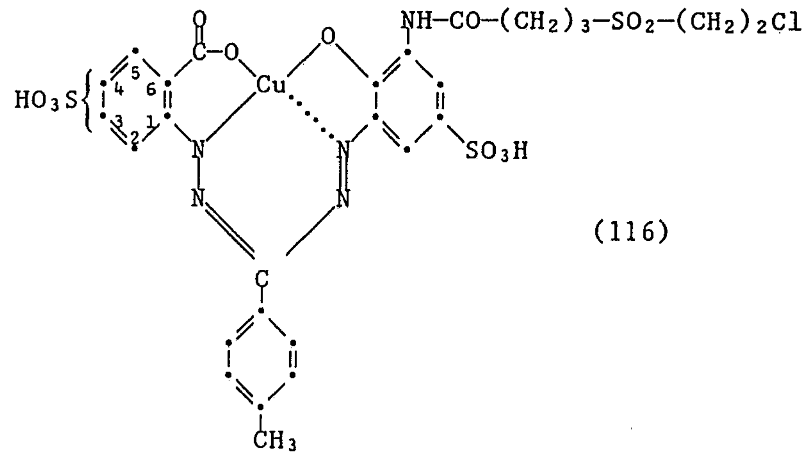 (116) | blau |
| 15 | 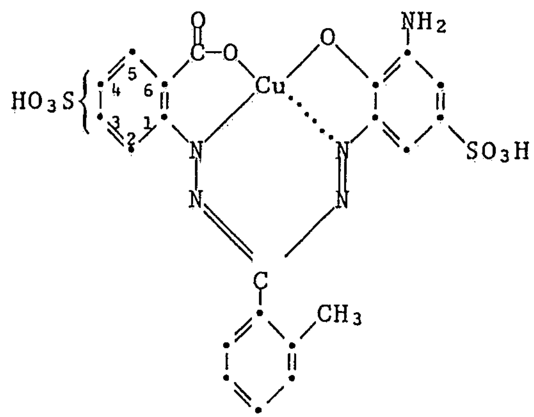 | 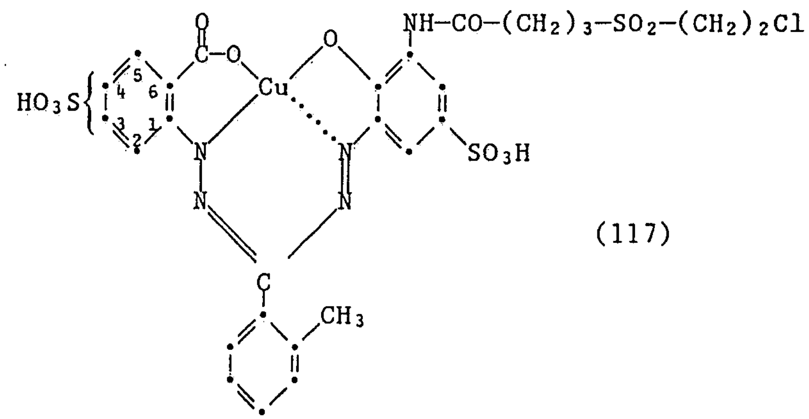 (117) | blau |

| Bsp. | Amin | Farbstoff | Nuance auf Wolle |
|---|---|---|---|
| 16 | 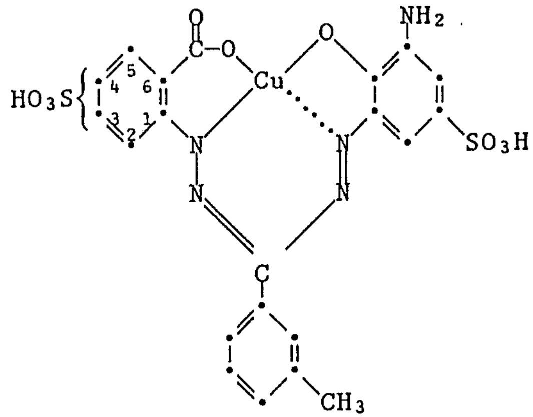 | 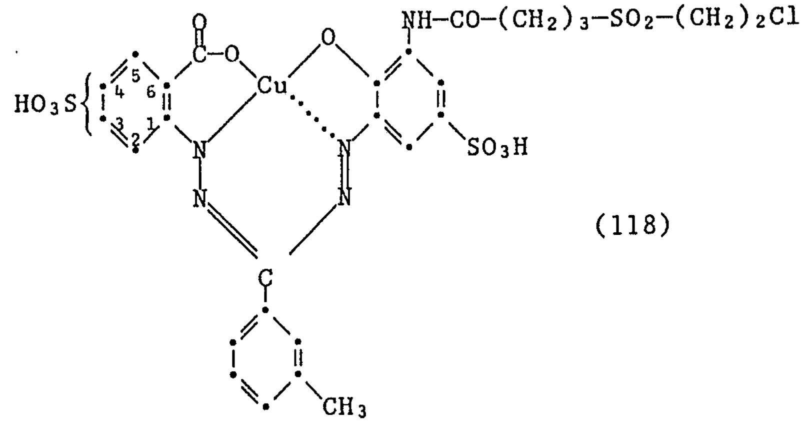 (118) | blau |
| 17 | 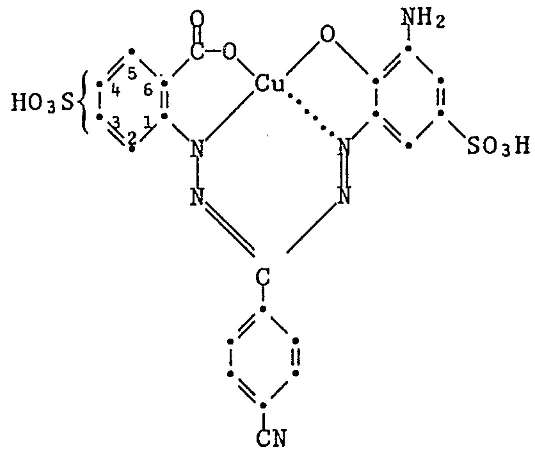 | 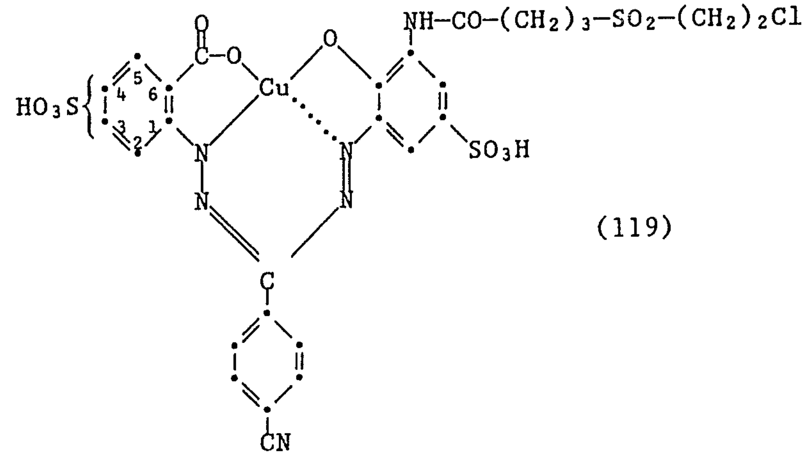 (119) | blau |

| Bsp. | Amin | Farbstoff | Nuance auf Wolle |
| --- | --- | --- | --- |
| 18 | 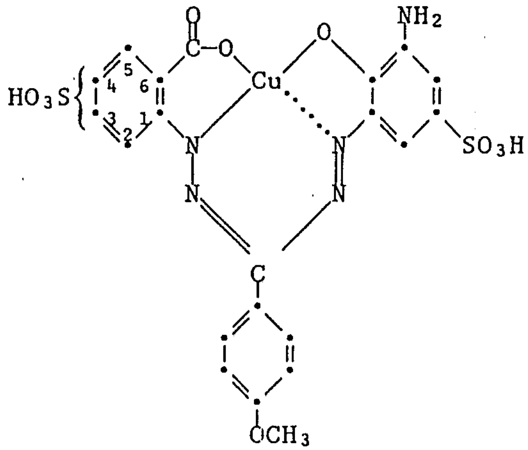 | 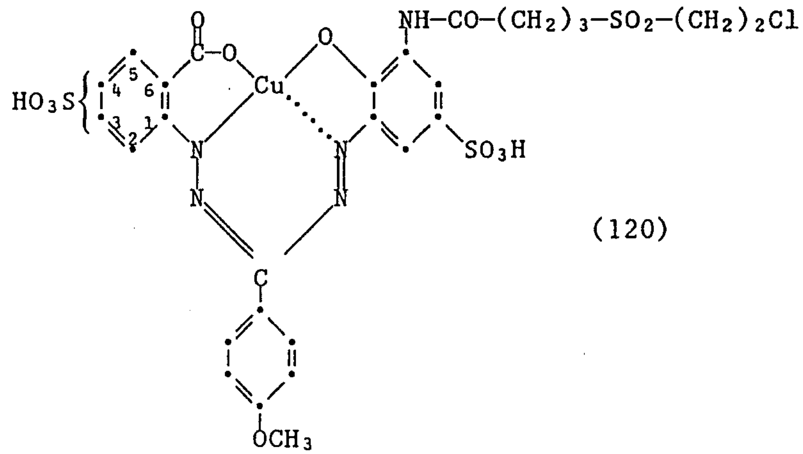 (120) | blau |
| 19 | 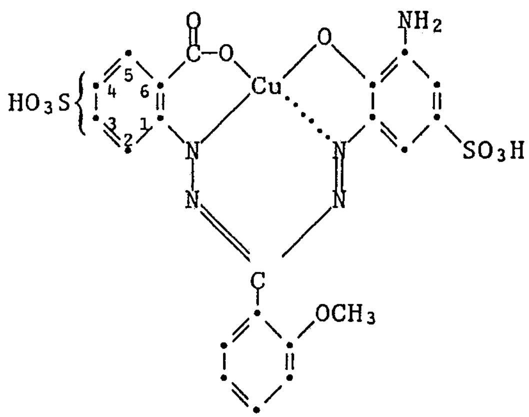 | 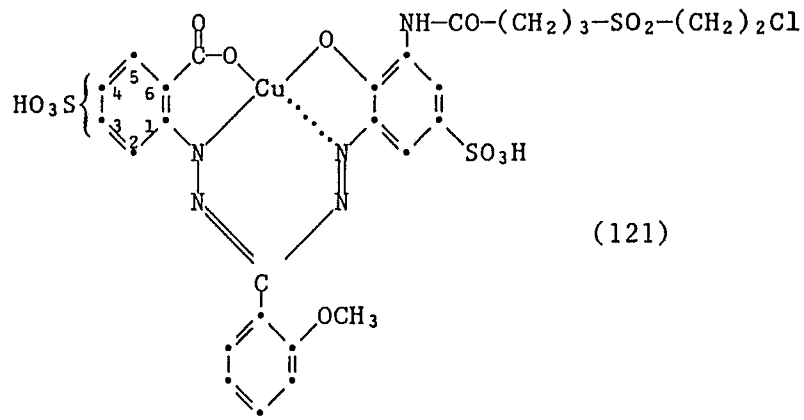 (121) | blau |

| Bsp. | Amin | Farbstoff | Nuance auf Wolle |
|---|---|---|---|
| 20 | 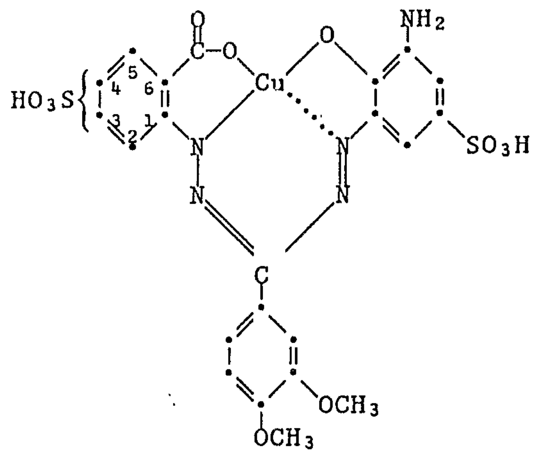 | 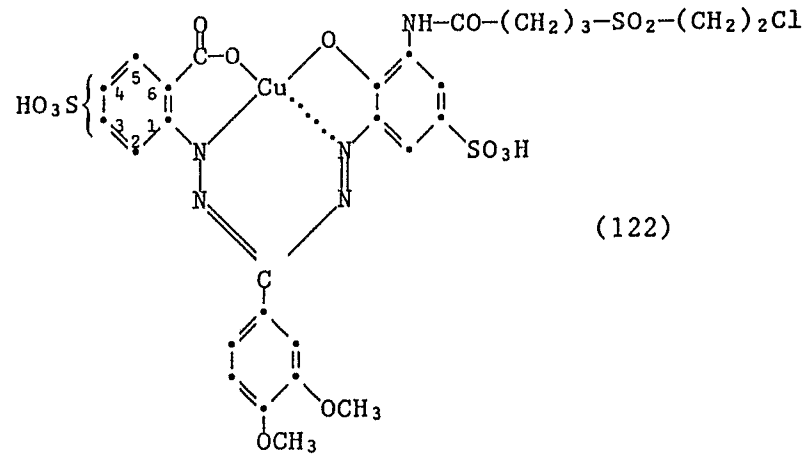 (122) | blau |
| 21 | 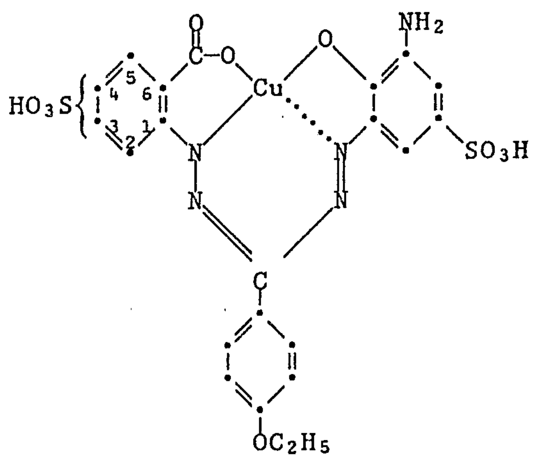 | 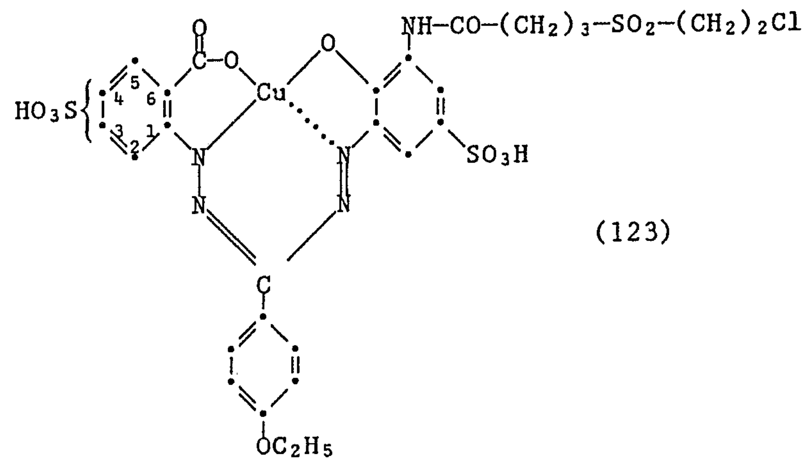 (123) | blau |

| Bsp. | Amin | Farbstoff | Nuance auf Wolle |
|---|---|---|---|
| 22 | 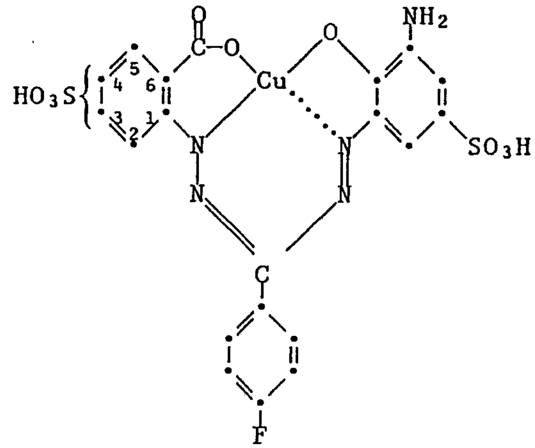 | 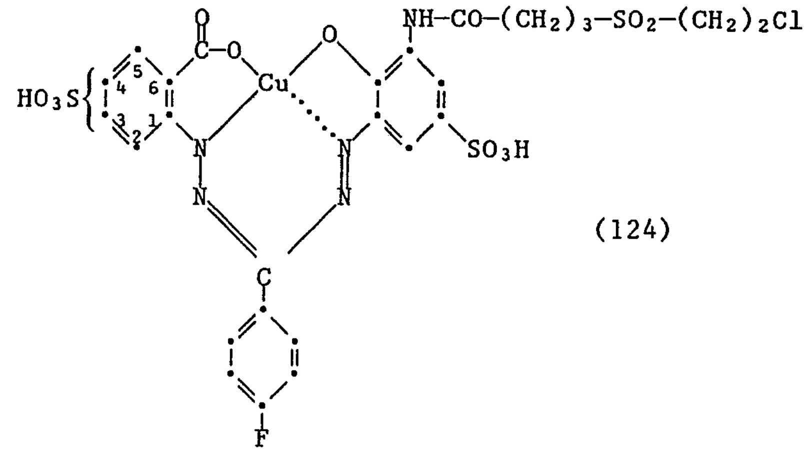 (124) | blau |
| 23 | 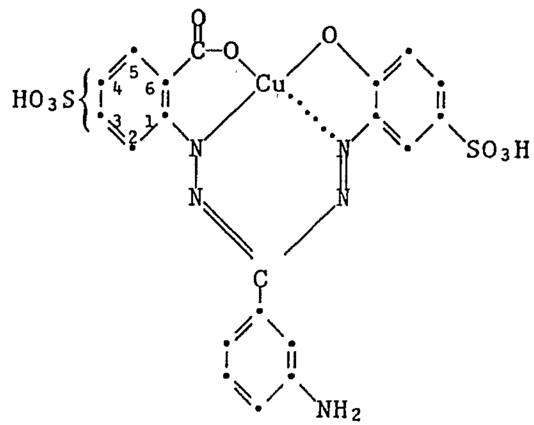 | 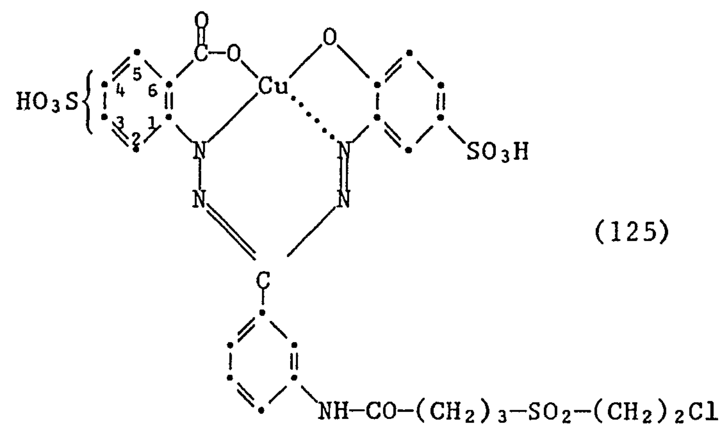 (125) | grünstichig blau |

Beispiele 24 und 25:

Wenn man wie in Beispiel 1 angegeben verfährt, jedoch anstelle des Amins der Formel (102) eine äquimolare Menge des Amins der Formel (105) oder des Amins der Formel (106) und anstelle 1,4 Teilen der Verbindung der Formel (103) eine äquimolare Menge der Verbindung der Formel

$Cl-CO-(CH_2)_3-SO_2-CH=CH_2$ (126),

welche bei einem pH-Wert von 10 bei Raumtemperatur innerhalb von ca. 30 Minuten zugetropft wird, verwendet, so erhält man den Farbstoff der Formel

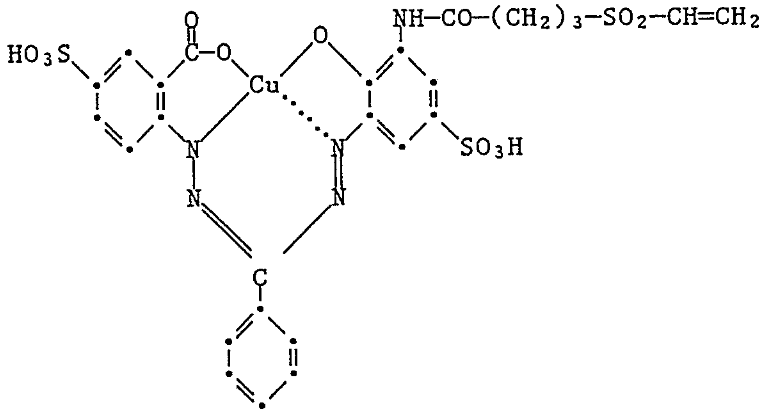

(127),

oder den Farbstoff der Formel

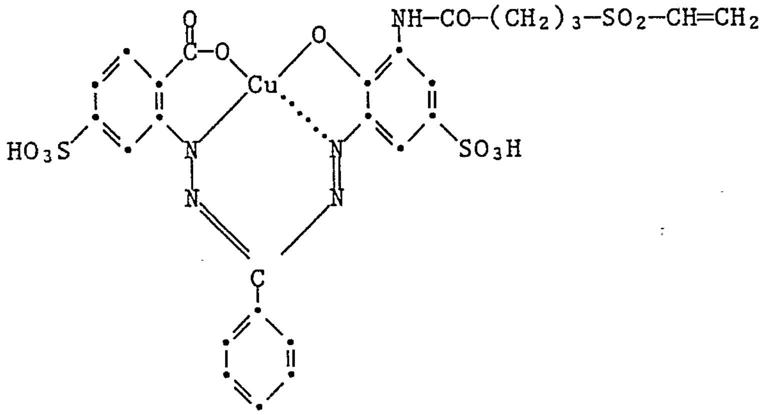

(128),

die Wolle in blauen Tönen anfärben.

Beispiel 26:

Wenn man wie in Beispiel 1 angegeben verfährt, jedoch anstelle 4,93 Teile des Amins der Formel (102) eine äquimolare Menge des Amins der Formel

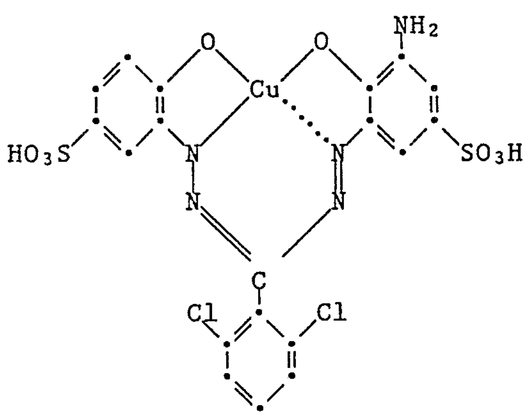

(129),

verwendet, so erhält man den Farbstoff der Formel

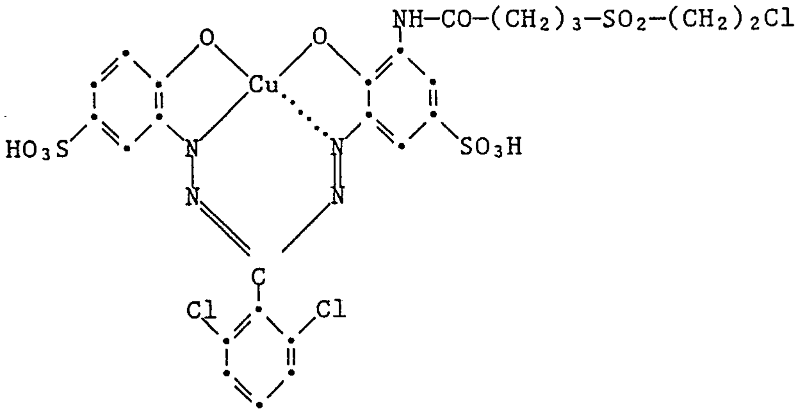

(130),

der Wolle in rotstichig blauen Tönen färbt.

Färbebeispiel 1

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

4 Teile des gemäss Beispiels 7 erhaltenen Farbstoffes werden in 100 Teilen Wasser heiss gelöst und dem obigen Färbebad zugegeben. Dann wird mit 100 Teilen vorgenetzten Wollstrickgarns eingegangen und im Verlaufe von 30 Minuten die Temperatur des Bades von 50 auf 80° erhöht.

Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Ansäuern mit 1 Teil 80°iger Ameisensäure, Zentrifugieren und Trocknen erhält man ein dunkelblau gefärbtes Wollgarn von sehr guter Nass- und Reibechtheit sowie ausgezeichneter Lichtechtheit.

Färbebeispiel 2

Ein filzfest ausgerüstetes Wollgewebe wird mit der nachfolgend beschriebenen Zubereitung getränkt und auf dem Foulard auf eine Feuchtigkeitsaufnahme von 250 % abgequetscht:

| | |
|---|---|
| 4 | Teile Diaprint REG® (säurebeständiges Verdickungsmittel), |
| 1 | Teil Sulfaminsäure |
| 0,2 | Teile Thymol |
| 0,2 | Teile Emulgator |
| 94,6 | Teile Wasser |
| 100 | Teile |

Das imprägnierte Material wird anschliessend in einer heizbaren Presse während 3 Minuten bei 100 bis 105° unter einem Druck von etwa 0,5 kg/cm$^2$ mit einem Transferpapier zusammengepresst, welches ein in üblicher Weise mit dem Farbstoff gemäss Beispiel 3 aufgebrachtes Druckmuster trägt. Nach Spülen und Trocknen des Wollgewebes weist dieses ein entsprechendes, blaues Druckmuster von sehr guten Echtheitseigenschaften auf.

Färbebeispiel 3

Ein Flanellgewebe aus chlorierter Wolle wird auf einem Foulard mit nachfolgend beschriebener Farbstoffzubereitung getränkt und auf eine Flüssigkeitsaufnahme van 100 % abgequetscht.

| | |
|---|---|
| 50 | Teile des Farbstoffes gemäss Beispiel 8 |
| 300 | Teile Harnstoff |
| 320 | Teile Solvitose OFA® à 4 % (Verdickungsmittel) |
| 10 | Teile einer Mischung von anionaktivem Fettalkoholäthersulfat mit nichtionogenen Netzmitteln |
| 10 | Teile des in Färbebeispiel 1 verwendeten Egalisiermittels |
| 10 | Teile Natrium-metabisulfit |
| 10 | Teile Essigsäure 80%ig |
| 290 | Teile Wasser |
| 1000 | Teile Foulardierflotte. |

Das imprägnierte Gewebe wird anschliessend in aufgerolltem und luftdicht verpacktem Zustand während 48 Stunden bei Raumtemperatur gelagert. Nach Spülen mit kaltem Wasser wird das Material auf frischem Bad mit soviel Ammoniak zu 24 % behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Blauton von ausgezeichneten Echtheitseigenschaften gefärbt.

Färbebeispiel 4

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht:

| | |
|---|---|
| 50 | Teile des Farbstoffes gemäss Beispiel 7 |
| 300 | Teile Solvitose OFA® à 40 % (Verdickungsmittel) |
| 20 | Teile einer Mischung von anionactivem Fettalkoholäthersulfat mit nichtionogenen Netzmitteln |
| 10 | Teile des in Färbesbeispiel 1 verwendeten Egalisiermittels |
| 20 | Teile Essigsäure 80%ig |
| 600 | Teile Wasser |
| 1000 | Teile Foulardierflotte. |

Das imprägnierte Gewebe wird anschliessend in einen Dämpfer gebracht und während 20 bis 40 Minuten mit gesättigtem Dampf behandelt. Nach Spülen mit kaltem Wasser wird das Material auf frischem Bad mit soviel 24%iger Ammoniaklösung behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Blauton von ausgezeichneten Echtheitseigenschaften gefärbt.

Färbebeispiel 5

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

3 Teile des gemäss Beispiel 8 erhaltenen Farbstoffes werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit heissem und kaltem Wasser, Absäuren mit 1 Teil 80%iger Ameisensäure, zentrifugieren und Trocknen erhält man ein dunkelblau gefärbtes Färbegut von sehr guter Nassechtheit sowie ausgezeichneter Lichtechtheit.

Färbebeispiel 6

In 1000 Teilen Wasser von 50° werden nacheinander 6 Teile 80%ige Essigsäure, 3 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 6 Teile Ammoniumsulfat gelöst.

3 Teile des gemäss Beispiel 2 erhaltenen Farbstoffes werden in 100 Teilen Wasser heiss gelöst und dem obigen Färbebad zugegeben. Ein Zirkulationsfärbeapparat wird mit 150 Teilen vogenetzter loser Wolle

beschickt und im Verlaufe von 30 Minuten die Temperatur der Flotte von 50° auf 97-99° erhöht, und anschliessend 90 Minuten kochend gefärbt. Der Farbstoff zieht fast vollkommen auf das Substrat auf. Nach Abkühlen der Flotte auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein faseregal blau gefärbtes Substrat mit guter Nass- und Reibechtheit sowie ausgezeichneter Lichtechtheit.

Färbebeispiel 7

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,45 Teile des gemäss Beispiel 7 erhaltenen Farbstoffes und 0,30 Teile des gelben Farbstoffes der Formel

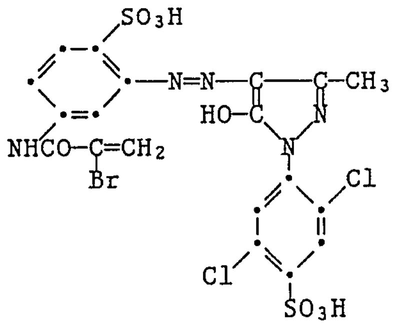

und 0,40 Teile des roten Farbstoffes der Formel

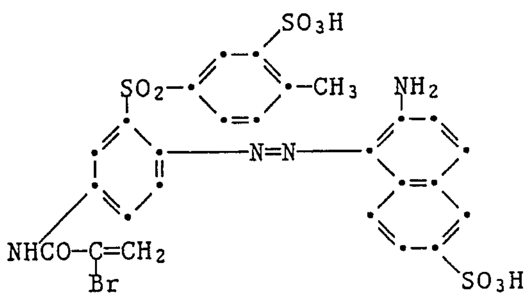

werden in 100 Teilen Wasser heiss gelöst und dem obigen Färbebad zugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure. Zentrifugieren und Trocknen erhält man ein faseregales dunkelbraun gefärbtes Wollgewebe von sehr guter Nass- und Reibechtheit sowie ausgezeichneter Lichtechtheit.

Färbebeispiel 8

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,6 Teile des gemäss Beispiel 3 erhaltenen Farbstoffes und 0,09 Teile des gelben Farbstoffes der Formel

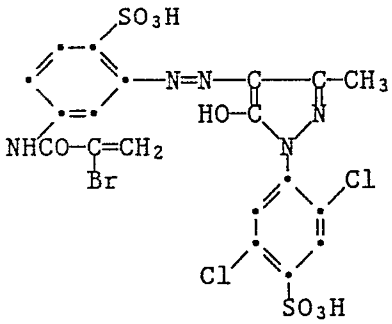

und 0,2 Teile des roten Farbstoffes der Formel

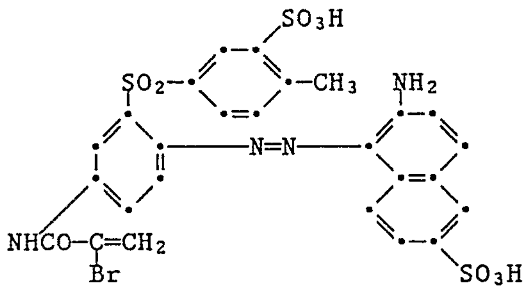

werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein grau gefärbtes Färbegut von sehr guter Nassechtheit sowie ausgezeichneter Lichtechtheit.

**Patentansprüche**

1. Faserreaktive Formazanfarbstoffe der Formel

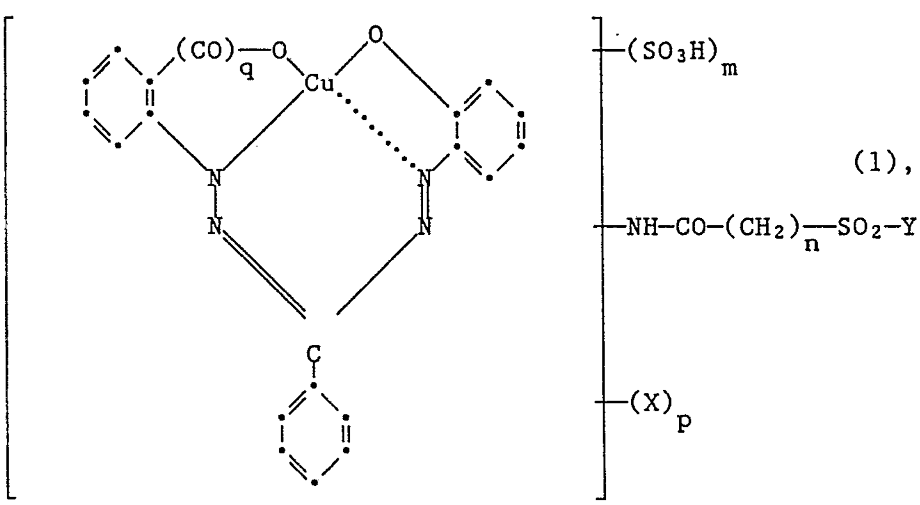

(1),

worin X $C_1$-$C_4$-Alkyl, $C_1$-$C_4$-Alkoxy, Halogen, Cyan oder Nitro ist, Y β-Halogenäthyl oder Vinyl, m die Zahl 1, 2 oder 3, n die Zahl 3 oder 4, p die Zahl 0, 1 oder 2 und q die Zahl 0 oder 1 bedeutet.

2. Faserreaktive Formazanfarbstoffe gemäss Anspruch 1, worin q die Zahl 1 bedeutet.

3. Faserreaktive Formazanfarbstoffe gemäss einem der Ansprüche 1 und 2, worin m die Zahl 2 bedeutet.

4. Faserreaktive Formazanfarbstoffe gemäss einem der Ansprüche 1 bis 3, worin X Chlor bedeutet.

5. Faserreaktive Formazanfarbstoffe gemäss einem der Ansprüche 1 bis 4, worin n die Zahl 3 bedeutet.

6. Faserreaktive Formazanfarbstoffe gemäss einem der Ansprüche 1 bis der Formel

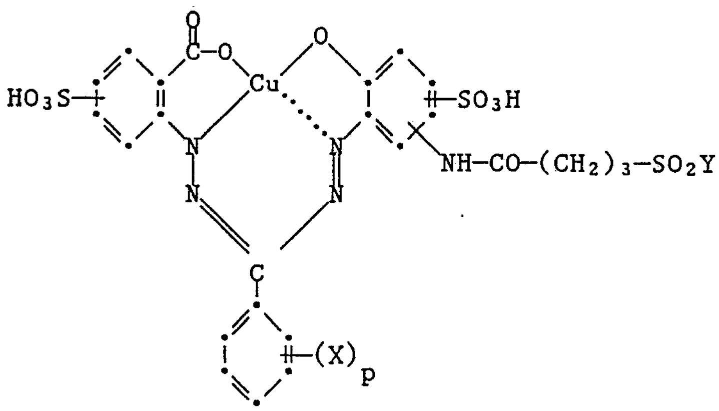

(2),

worin X Chlor ist und Y und p die in Anspruch (1) angegebenen Bedeutungen haben.

7. Faserreaktive Formazanfarbstoffe gemäss einem der Ansprüche 1 bis der Formel

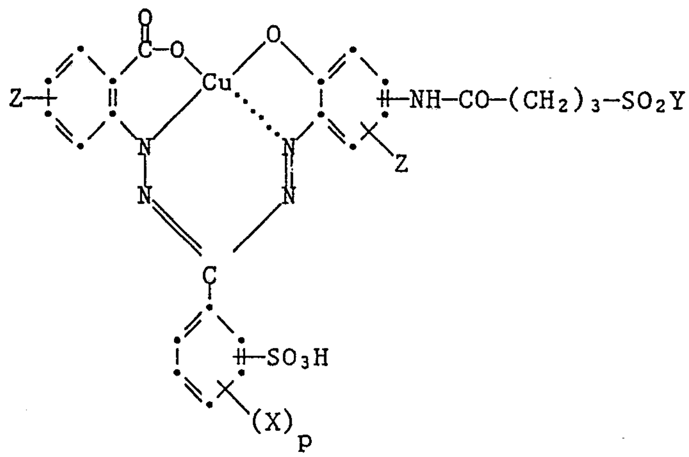

(3),

worin X Chlor ist und Y und p die in Anspruch (1) angegebenen Bedeutungen haben, ein Z Wasserstoff und das andere Z Sulfo ist.

8. Faserreaktive Formazanfarbstoffe gemäss Anspruch 6 der Formel

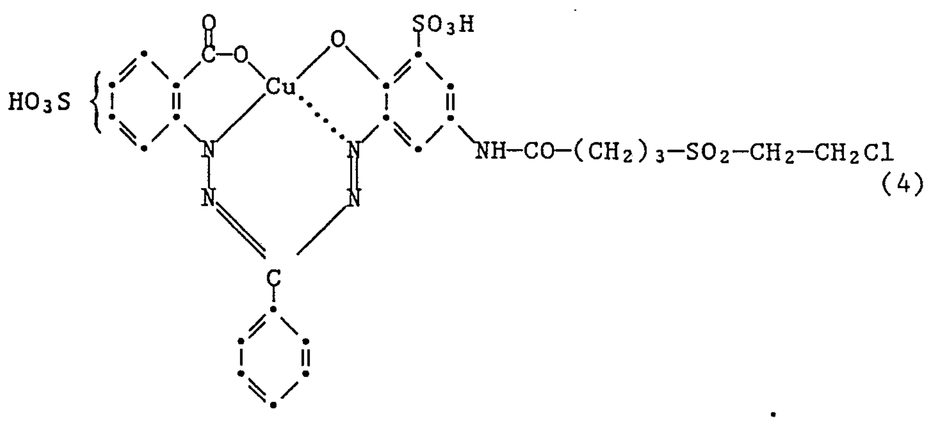

(4)

9. Faserreaktive Formazanfarbstoffe gemäss Anspruch 6 der Formel

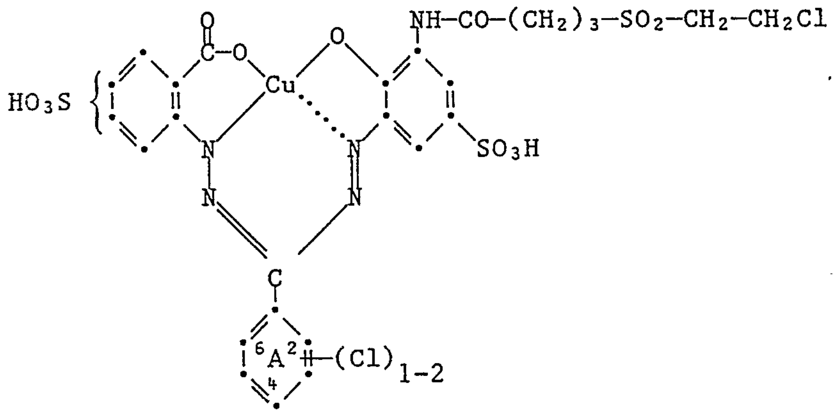

(5),

worin Chlor in 2-, 3- oder 4-Stellung an den Phenylring A gebunden ist, oder worin Chlor in 2- und 6-Stellung an den Phenylring A gebunden ist.

10. Faserreaktive Formazanfarbstoffe gemäss Anspruch 6 der Formel

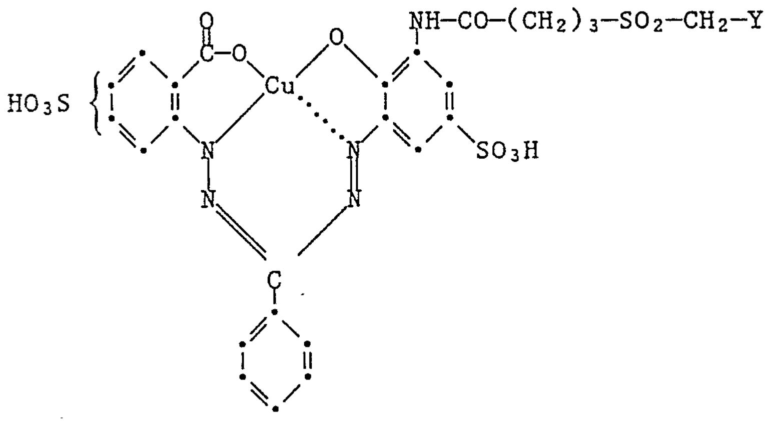

(6),

worin Y β-Chloräthyl oder Vinyl ist.

11. Faserreaktive Formazanfarbstoffe gemäss Anspruch 7 der Formel

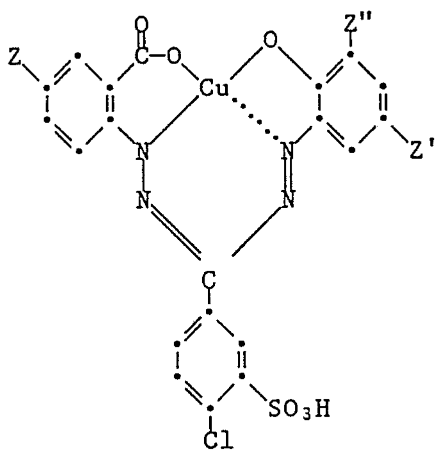

(7),

worin Z Wasserstoff, Z′ Sulfo und Z″ $-NH-CO-(CH_2)_3-SO_2-(CH_2)_2Cl$ ist, oder worin Z Sulfo, Z′ $-NH-CO-(CH_2)_3-SO_2-(CH_2)_2Cl$ und Z″ Wasserstoff ist.

12. Faserreaktiver Formazanfarbstoff gemäss Anspruch 8 der Formel

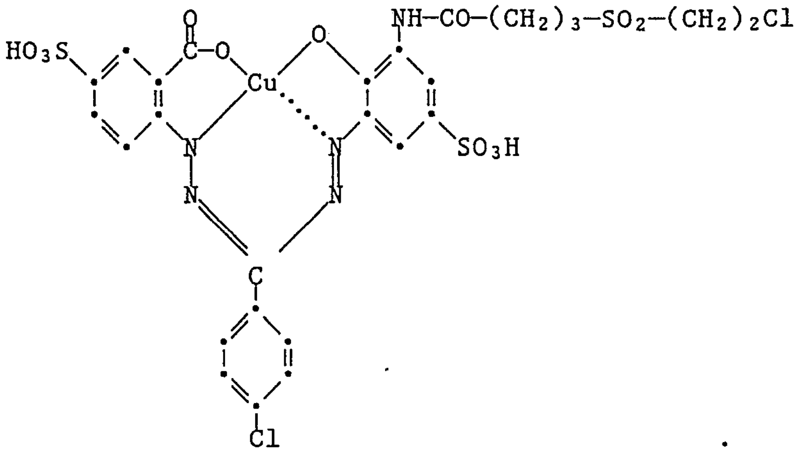

(8)

13. Verfahren zur Herstellung der faserreaktiven Formazanfarbstoffe gemäss Anspruch 1, dadurch gekennzeichnet, dass man ein Amin der Formel

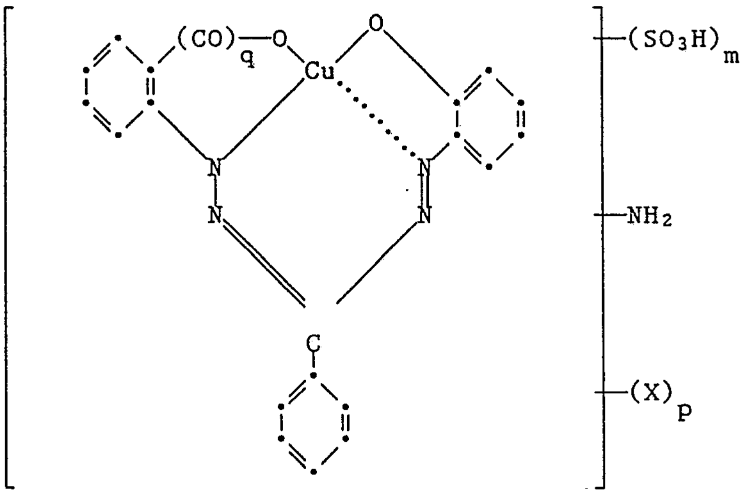

(9),

worin X, m, p und q die in Anspruch (1) angegebenen Bedeutungen haben, mit einer den Rest der Formel
$-CO-(CH_2)_n-SO_2-Y$ (10),
einführenden Verbindung, worin n und Y die in Anspruch 1 angegebenen Bedeutungen haben, umsetzt.

14. Verwendung der faserreaktiven Formazanfarbstoffe gemäss einem der Ansprüche 1 bis 12, bzw. der gemäss Anspruch 13 erhaltenen faserreaktiven Formazanfarbstoffe zum Färben und Bedrucken.

15. Verwendung gemäss Anspruch 14 zum Färben und Bedrucken von Papier, Leder und hydroxylgruppenhaltigen oder stickstoffhaltigen Textilmaterialien.

16. Verfahren zum Trichromie-Färben oder -Bedrucken von natürlichen und synthetischen Polyamidmaterialien mit Farbstoffmischungen, dadurch gekennzeichnet, dass man einen faserreaktiven Formazanfarbstoff der Formel

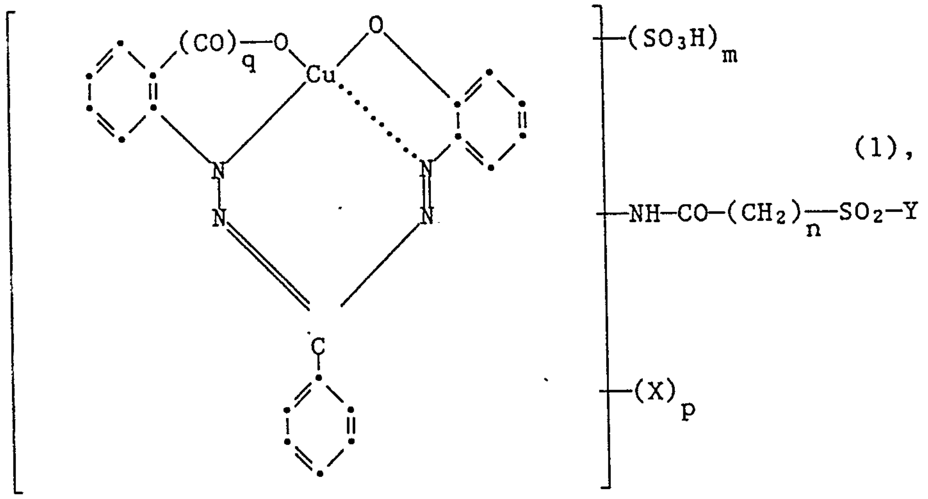

(1),

worin X $C_1$-$C_4$-Alkyl, $C_1$-$C_4$-Alkoxy, Halogen, Cyan oder Nitro ist, Y β-Halogenäthyl oder Vinyl, m die Zahl 1, 2 oder 3, n die Zahl 3 oder 4, p die Zahl 0, 1 oder 2 und q die Zahl 0 oder 1 bedeutet, zusammen mit einem faserreaktiven, sulfogruppenhaltigen rotfärbenden Farbstoff und einem faserreaktiven, sulfogruppenhaltigen gelb- oder orange-färbenden Farbstoff verwendet.

17. Verfahren gemäss Anspruch 16, dadurch gekennzeichnet, dass man als faserreaktive, sulfogruppenhaltige gelb- oder orange- und rotfärbende Farbstoffe Azofarbstoffe verwendet.

18. Verfahren gemäss einem der Ansprche 16 und 17, dadurch gekennzeichnet, dass die gelb- oder orange- und rotfärbenden Farbstoffe als faserreaktive Gruppe jeweils eine Halogentriazin-, Halogenpyrimidin-Gruppe oder eine Gruppe der aliphatischen Reihe enthalten.

19. Verfahrem gemäss einem der Ansprüche 16 bis 18, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder α,β-Dihalogenpropionyl, insbesondere α,β-Dibrompropionyl, oder α-Halogenacryloyl, insbesondere α-Bromacryloyl, enthalten.

20. Verfahren gemäss einem der Ansprüche 16 bis 19, dadurch gekennzeichnet, dass zum Trichromie-Färben oder -Bedrucken natürliches Polyamidmaterial, insbesondere Wolle, verwendet wird.

**Patentansprüche für folgenden Vertragsstaat: ES**

1. Verfahren zur Herstellung von faserreaktiven Formazanfarbstoffen der Formel

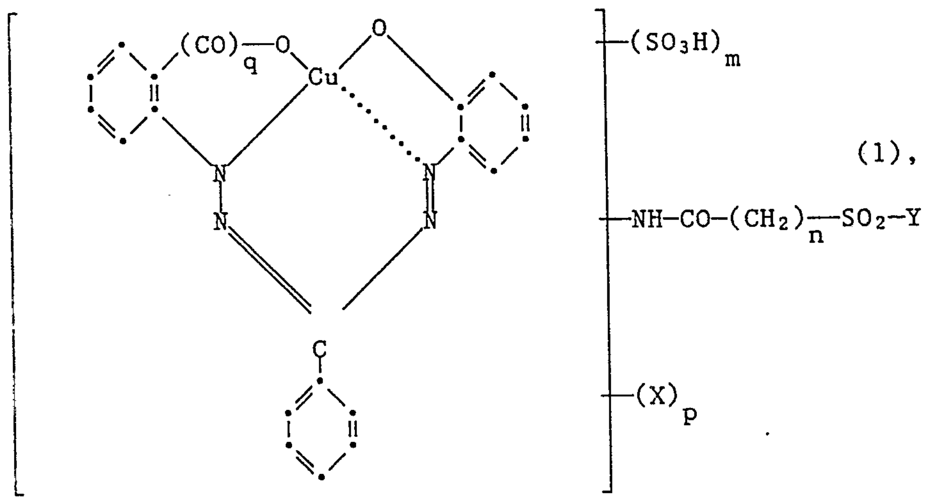

(1),

worin X $C_1$-$C_4$-Alkyl, $C_1$-$C_4$-Alkoxy, Halogen, Cyan oder Nitro ist, Y β-Halogenäthyl oder Vinyl, m die Zahl 1, 2 oder 3, n die Zahl 3 oder 4, p die Zahl 0, 1 oder 2 und q die Zahl 0 oder 1 bedeutet, dadurch gekennzeichnet, dass man ein Amin der Formel

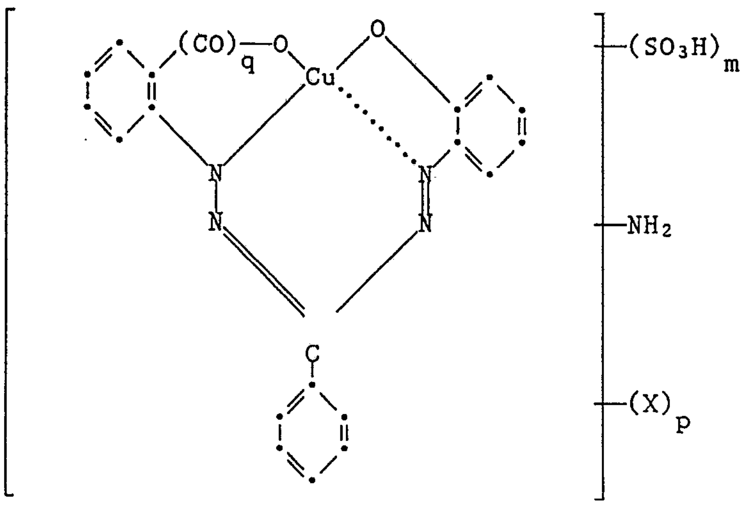

(9),

worin X, m, p und q die unter Formel (1) angegebenen Bedeutungen haben, mit einer den Rest der Formel
$-CO-(CH_2)_{\overline{n}}-SO_2Y$ (10),
einführenden Verbindung, worin n und Y die unter Formel (1) angegebenen Bedeutungen haben, umsetzt.

2. Verfahren gemäss Anspruch 1, dadurch gekennzeichnet, dass man ein Amin der Formel (9) verwendet, worin q die Zahl 1 bedeutet.

3. Verfahren gemäss einem der Ansprüche 1 und 2, dadurch gekennzeichnet, dass man ein Amin der Formel (9) verwendet, worin m die Zahl 2 bedeutet.

4. Verfahren gemäss einem der Ansprüche 1 bis 3, dadurch gekennzeichnet, dass man ein Amin der Formel (9) verwendet, worin X Chlor bedeutet.

5. Verfahren gemäss einem der Ansprüche 1 bis 4, dadurch gekennzeichnet, dass man eine Verbindung der Formel (10) verwendet, worin n die Zahl 3 bedeutet.

6. Verfahren gemäss einem der Ansprüche 1 bis 5, dadurch gekennzeichnet, dass man ein Amin der Formel

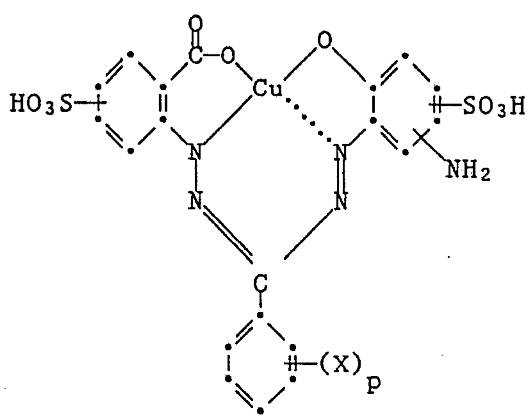

(11),

worin X Chlor ist und p die in Anspruch 1 angegebenen Bedeutungen hat, mit einer den Rest der Formel
$-CO-(CH_2)_3-SO_2-Y$ (12),
einführenden Verbindung, worin Y die in Anspruch 1 angegebenen Bedeutungen hat, umsetzt.

7.Verfahren gemäss einem der Ansprüche 1 bis 5, dadurch gekennzeichnet, dass man ein Amin der Formel

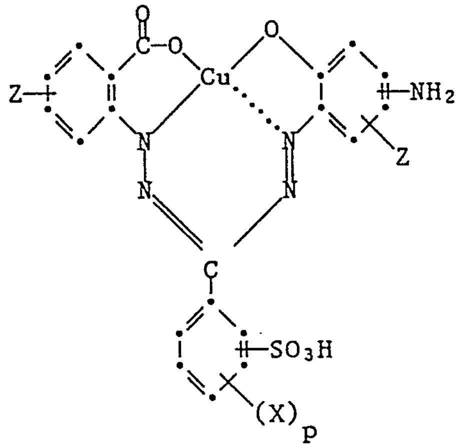

(13),

worin X Chlor ist, ein Z Wasserstoff und das andere Z Sulfo ist und p die in Anspruch 1 angegebenen Bedeutungen hat, mit einer den Rest der Formel $-CO-(CH_2)_3-SO_2-Y$ (12), worin Y die in Anspruch 1 angegebenen Bedeutungen hat, umsetzt.

8. Verfahren gemäss Anspruch 6, dadurch gekennzeichnet, dass man ein Amin der Formel

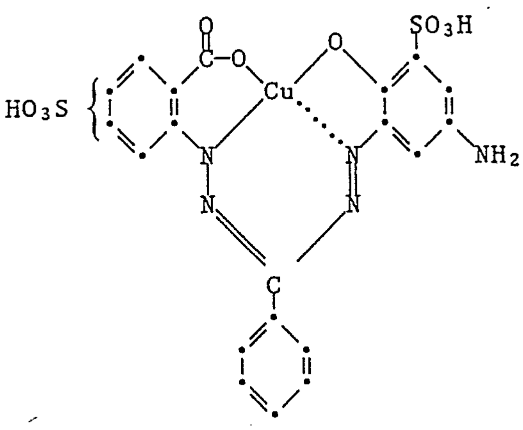

(14)

mit einer Verbindung der Formel

$Cl-CO-(CH_2)_3-SO_2-(CH_2)_2Cl$ (15)

umsetzt.

9. Verfahren gemäss Anspruch 6, dadurch gekennzeichnet, dass man ein Amin der Formel

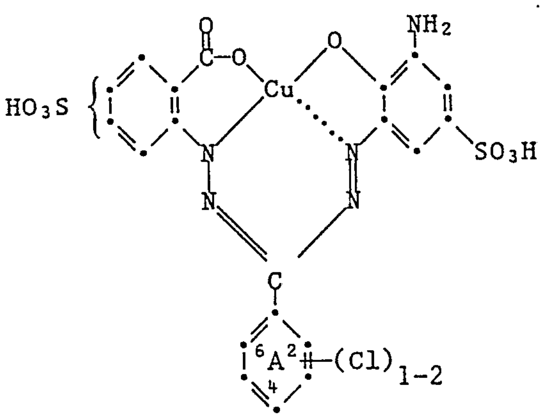

(16),

worin Chlor in 2-, 3- oder 4-Stellung an den Phenylring A gebunden ist, oder worin Chlor in 2- und 6-Stellung an den Phenylring A gebunden ist, mit einer Verbindung der Formel

$Cl-CO-(CH_2)_3-SO_2-(CH_2)_2Cl$ (15)

umsetzt.

10. Verfahren gemäss Anspruch 6, dadurch gekennzeichnet, dass man ein Amin der Formel

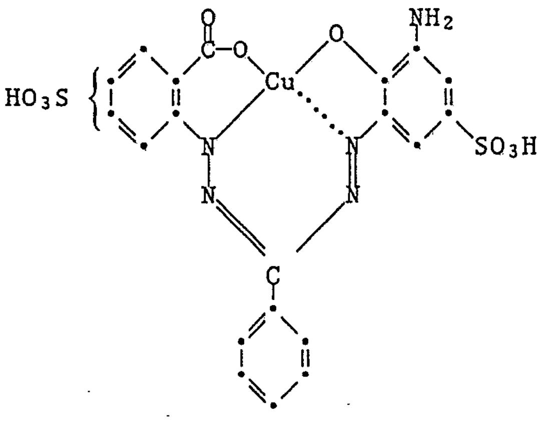

(17),

mit einer Verbindung der Formel

$Cl-CO-(CH_2)_3-SO_2-(CH_2)_2Cl$ (15)

umsetzt und gegebenenfalls anschliessend die β-Chloräthylsulfonyl-Gruppe in die Vinylsulfonyl-Gruppe überführt.

11. Verfahren gemäss Anspruch 7, dadurch gekennzeichnet, dass man ein Amin der Formel

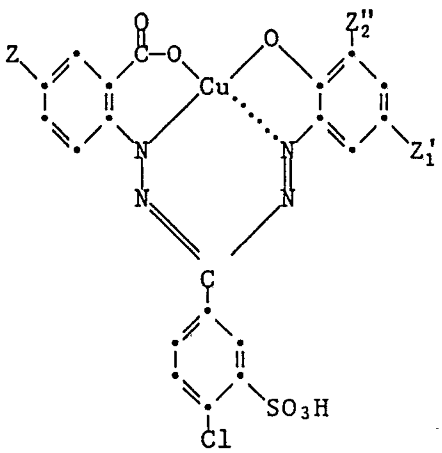

(18),

worin Z Wasserstoff, $Z_1'$ Sulfo und $Z_2''$ -$NH_2$ ist, oder worin Z Sulfo, $Z_1'$ -$NH_2$ und $Z_2''$ Wasserstoff ist, mit einer Verbindung der Formel

$Cl-CO-(CH_2)_3-SO_2-(CH_2)_2Cl$ (15)

umsetzt.

12. Verfahren gemäss Anspruch 8, dadurch gekennzeichnet, dass man ein Amin der Formel

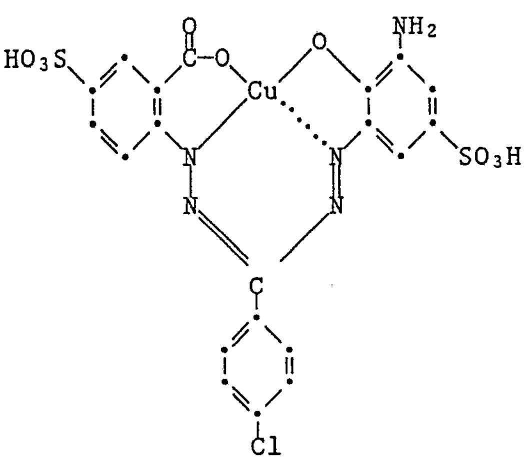

(19)

mit einer Verbindung der Formel

$Cl-CO-(CH_2)_3-SO_2-(CH_2)_2Cl$ (15)

umsetzt.

13. Verwendung der gemäss einem der Ansprüche 1 bis 12 erhaltenen faserreaktiven Formazanfarbstoffe zum Färben und Bedrucken.

14. Verwendung gemäss Anspruch 13 zum Färben und Bedrucken von Papier, Leder und hydroxylgruppenhaltigen oder stickstoffhaltigen Textilmaterialien.

15. Verfahren zum Trichromie-Färben oder -Bedrucken von natürlichen und synthetischen Polyamidmaterialien mit Farbstoffmischungen, dadurch gekennzeichnet, dass man einen gemäss Anspruch 1 erhaltenen faserreaktiven Formazanfarbstoff zusammen mit einem faserreaktiven, sulfogruppenhaltigen rotfärbenden Farbstoff und einem faserreaktiven, sulfogruppenhaltigen gelb- oder orange-färbenden Farbstoff verwendet.

16. Verfahren gemäss Anspruch 15, dadurch gekennzeichnet, dass man als faserreaktive, sulfogruppenhaltige gelb- oder orange- und rotfärbende Farbstoffe Azofarbstoffe verwendet.

17. Verfahren gemäss einem der Ansprüche 15 und 16, dadurch gekennzeichnet, dass die gelb- oder orange- und rotfärbenden Farbstoffe als faserreaktive Gruppe jeweils eine Halogentriazin-, Halogenpyrimidin-Gruppe oder eine Gruppe der aliphatischen Reihe enthalten.

18. Verfahrem gemäss einem der Ansprüche 15 bis 17, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder α,β-Dihalogenpropionyl, insbesondere α,β-Dibrompropionyl, oder α-Halogenacryloyl, insbesondere α-Bromacryloyl, enthalten.

19. Verfahren gemäss einem der Ansprüche 15 bis 18, dadurch gekennzeichnet, dass zum Trichromie-Färben oder -Bedrucken natürliches Polyamidmaterial, insbesondere Wolle, verwendet wird.

Europäisches Patentamt

# EUROPÄISCHER RECHERCHENBERICHT

Nummer der Anmeldung

EP 89 81 0314

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 210 951 (CIBA-GEIGY)<br>* Anspruch 1; Seite 45, Formel 3 * | 1-3,13-15 | C 09 B 62/503<br>C 09 B 67/22<br>D 06 P 1/384 |
| A | EP-A-0 114 032 (CIBA-GEIGY)<br>* Anspruch 1; Seite 8, letzter Absatz - Seite 9, Absatz 1; Seite 18, Verbindung 4; Seite 19, Verbindungen 1,2 * | 1-3,13-15 | |
| | | | **RECHERCHIERTE SACHGEBIETE (Int. Cl.4)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 18-07-1989 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)